# FASCICULE DE BREVET EUROPEEN

(11) **EP 2 035 178 B1**
(45) Date de publication et mention de la délivrance du brevet: **10.05.2017**
(21) Numéro de dépôt: 07803975.7
(22) Date de dépôt: 29.06.2007
(51) Int. Cl.: B23K 11/11, B23K 11/31

(54) **PINCE A ENSERRER DES TOLES, UTILISEE EN ASSOCIATION AVEC UN BRAS MANIPULATEUR, ET A MODULE D'EQUILIBRAGE ELECTROMECANIQUE**
IN KOMBINATION MIT EINEM MANIPULATORARM VERWENDETER BLECHGREIFER MIT ELEKTROMECHANISCHEM AUSGLEICHSMODUL
SHEET METAL CLAMP USED IN COMBINATION WITH A MANIPULATOR ARM, AND HAVING AN ELECTROMECHANICAL BALANCING MODULE

(30) Priorité: 03.07.2006 FR 0606006
(43) Date de publication de la demande: 18.03.2009
(73) Titulaire: ARO Welding Technologies, 72500 Château-du-Loir (FR)
(72) Inventeur: TIBERGHIEN, Olivier, 37540 Saint Cyr Sur Loire (FR)
(74) Mandataire: Cabinet Plasseraud
(86) Numéro de dépôt international: PCT/FR2007/051568
(87) Numéro de publication internationale: WO 2008/003891

(56) Documents cités:
- WO-A-03/008146
- DE-A1- 3 840 636
- DE-U1- 20 214 970
- US-A1- 5 958 262

## Description

La présente invention concerne tout type de pinces destinées à enserrer des tôles et utilisées en association avec un bras manipulateur, dit robot. Ledit robot peut servir soit à déplacer l'outil autour de l'assemblage de tôles à réaliser ou, inversement, à déplacer l'assemblage devant l'outil, lui-même alors fixé à un pied rigide.

Plus précisément, cette invention concerne les pinces telles que définies ci-dessus, du type général comprenant un bâti rigide, lié à un support tel qu'un pied rigide ou le robot, un sous-ensemble mobile, lié au bâti et comportant lui-même un premier bras, dit fixe, un second bras, dit mobile, et un actionneur principal, apte à déplacer le bras mobile par rapport au bras fixe, suivant un premier degré de liberté, en translation ou rotation, afin de fermer ou d'ouvrir la pince, pour respectivement, enserrer un assemblage de tôles entre les bras fixe et mobile (rapprochés l'un de l'autre par l'actionneur) ou libérer l'assemblage de tôles (en écartant les bras l'un de l'autre par l'actionneur), la pince comportant également un module d'équilibrage, introduisant un degré de liberté supplémentaire entre ledit support, d'une part, et, d'autre part, un ensemble intégrant ledit sous-ensemble mobile, afin d'équilibrer les efforts exercés sur les extrémités respectivement des bras fixe et mobile en position de fermeture, ledit module d'équilibrage comportant :
- un dispositif permettant un déplacement suivant ledit degré de liberté supplémentaire, en translation, dudit sous-ensemble mobile par rapport au support, et
- un système d'équilibrage comprenant un dispositif souple, lié audit sous-ensemble mobile et sollicitant, suivant ledit degré de liberté supplémentaire, au moins un organe lié audit support, comme connu par DE 202 14 940 U1, correspondant au préambule de la revendication 1. DE 202 14 970 U1 décrit une pince de soudage robotisée, composée d'une unité de pince portée de manière mobile par un bâti, avec les bras de pince et l'actionneur de pince, et un système d'équilibrage pour l'unité de pince, le système d'équilibrage comprenant un actionneur d'équilibrage, apte à amener le sous-ensemble mobile constitué des bras et de l'actionneur de pince dans une position d'équilibrage par rapport au support auquel est lié le bâti, ainsi que deux ressorts antagonistes et un dispositif écarteur, disposé entre les ressorts et pouvant être commandé en fonction de l'orientation de la pince.

Dans une application, pour laquelle l'invention présente le plus grand intérêt pour le demandeur, la pince est une pince à souder par résistance électrique, auquel cas les extrémités respectivement des bras fixe et mobile sont des électrodes de soudage, respectivement fixe et mobile. De même, le degré de liberté supplémentaire pour réaliser l'opération d'équilibrage peut être une translation avec un dispositif de guidage et le dispositif souple comprend au moins un ressort d'équilibrage qui s'étend parallèlement à la direction du déplacement en translation et, avantageusement, est constitué d'au moins une paire de ressorts antagonistes travaillant en compression.

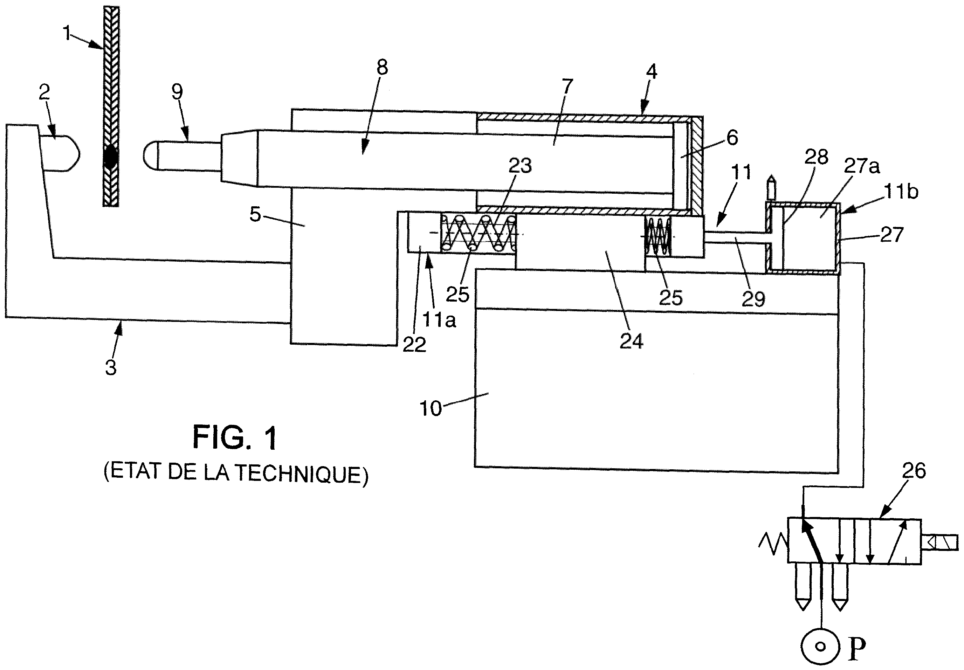

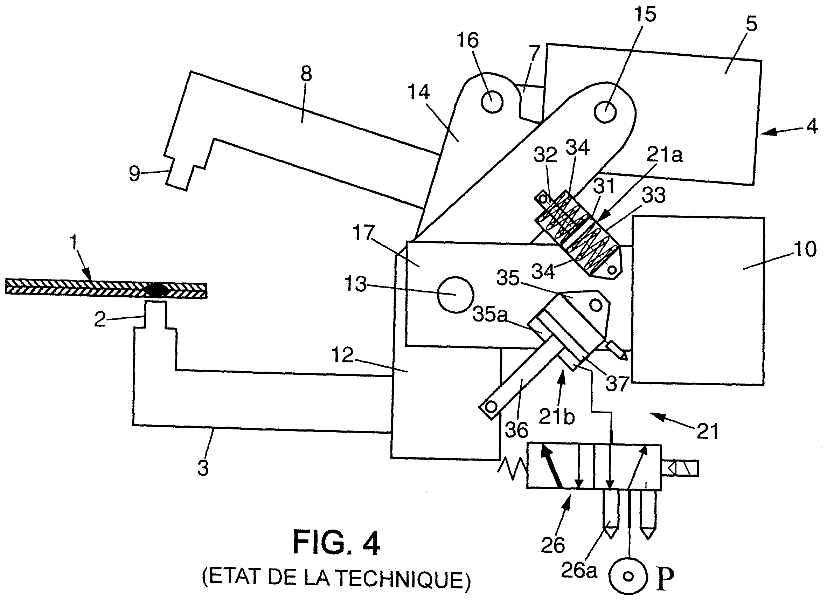

Sur les pinces à souder par résistance électrique de ce type et appartenant à l'état de la technique, selon le travail à réaliser, deux cinématiques sont possibles pour le bras et l'électrode mobiles :
- le premier degré de liberté est une translation du bras et de l'électrode mobiles par rapport au bras fixe portant l'électrode fixe, par un guidage linéaire assuré par l'actionneur principal, qui est un actionneur linéaire de tout type convenable connu, hydraulique, pneumatique, mécanique ou électrique, qui déplace directement le bras et l'électrode mobiles, la pince étant alors dite en C ou en J, comme représentée sur les figures 1 à 3 annexées, ou
- le premier degré de liberté est une rotation du bras et de l'électrode mobiles, autour d'un axe sur le bâti, par rapport au bras fixe portant l'électrode fixe, la pince étant encore être un actionneur linéaire, du type vérin, soit monté pivotant par son corps sur le support de bras fixe autour d'un axe parallèle à l'axe d'articulation du bras et de l'électrode mobiles, soit fixé de façon rigide sur ce même support de bras fixe, une liaison mécanique adéquate à 2 degrés de liberté permettant alors à la tige du vérin se déplaçant linéairement suivant une direction donnée de suivre les mouvements de basculement du bras mobile autour de l'axe d'articulation. L'effort de pivotement du bras et de l'électrode mobiles est transmis de l'actionneur au bras mobile par un levier, dont le bras mobile est solidaire, pivotant autour de l'axe d'articulation, et sur lequel pivote l'extrémité de la tige de l'actionneur, comme représenté sur la figure 4 annexée.

Sur les figures 1 à 4, les mêmes références désignent des composants identiques ou analogues sur les pinces en C et en X représentées dans différentes positions décrites ci-dessous.

Pour assurer le soudage électrique par points d'un assemblage de tôles 1, la pince en C des figures 1 à 3 comprend principalement une électrode fixe 2 montée à l'extrémité d'un bras fixe 3 solidaire d'un support du bras fixe 3 et/ ou du corps 5 d'un actionneur principal ou de soudage 4, par exemple de type vérin pneumatique, dont le piston 6 et la tige 7 sont solidaires en déplacement d'un bras mobile 8, guidé par le support 5 et dans le prolongement de la tige 7, et dont l'extrémité libre supporte une électrode mobile 9, ces composants constituant un sous-ensemble monté mobile, selon un degré de liberté supplémentaire qui, sur ces figures, correspond également à une translation, sur un bâti 10 rigidement fixé à un support, qui peut être un robot manipulateur ou un pied rigide, ce degré de liberté supplémentaire du sous-ensemble (2-9) par rapport au bâti 10 étant procuré par un module 11 décrit ci-dessous.

De même, sur la pince en X de la figure 4, l'électrode fixe 2 et le bras fixe 3 sont solidaires d'un support de bras rigide 12 monté sur un axe de pivot 13 autour duquel pivote un levier rigide 14 supportant le bras mobile 8 et l'électrode mobile 9, l'actionneur de soudage 4, également linéaire, étant pivotant par son corps 5 sur le support 12 autour d'un axe 15 parallèle à l'axe 13, tandis que l'extrémité libre de la tige 7 de l'actionneur 4 actionne le levier 14, sur lequel la tige 7 pivote autour d'un axe 16 également parallèle à l'axe 13, de sorte à commander les pivotements du bras 8 et de l'électrode 9 mobiles par rapport au bras 3 et à l'électrode 2 fixes par rotation autour de l'axe 13 supporté par une console rigide 17 du bâti 10 de l'outil, fixé rigidement au support d'outil (pied fixe ou robot manipulateur).

Un degré de liberté supplémentaire, qui est une rotation, est donné au sous-ensemble des bras (3, 8) et électrodes (2, 9) fixes et mobiles et de l'actionneur 4 de soudage par rapport au bâti 10 par pivotement de ce sous-ensemble avec le support de bras 12 et le levier 14 autour de l'axe 13 grâce à un module 21, dont la structure et les fonctions sont décrites ci-dessous.

Lorsque le procédé d'assemblage par soudage, qui peut débuter lorsque les tôles 1 sont enserrées entre les électrodes 2 et 9, est automatisé, la pince ou l'assemblage des tôles 1 à souder est porté(e) à l'extrémité d'un bras articulé d'un robot manipulateur. Mais, dans le mode le plus habituel de mise en oeuvre du procédé de soudage, comme décrit ci-dessous, la pince est transportée par le robot et positionnée devant l'assemblage de tôles 1, la problématique étant la même dans le cas inverse où l'assemblage de tôles 1 est transporté et positionné devant la pince.

Suivant la programmation de trajectoire, le robot vient positionner l'électrode fixe 2 de la pince devant l'assemblage de tôles 1 à souder. Toutefois, pour des raisons techniques liées à :
- la précision de positionnement du robot ;
- l'incertitude sur la géométrie de la pince (tolérances d'usinage et de montage de ses composants, usure éventuelle des électrodes 2 et 9 lors du procédé);et,
- l'erreur quant à la position réelle de l'assemblage de tôles 1 par rapport à sa position théorique,
il est nécessaire, lors de la programmation du robot, de prévoir une certaine distance entre la position théorique de l'électrode fixe 2 au bout du bras fixe 3 et la position théorique de l'assemblage de tôles 1.

Cette distance doit permettre, pendant les phases dynamiques de déplacement du robot, de garantir toute absence de contact entre l'électrode 2 du bras fixe 3 et l'assemblage de tôles 1, afin d'éviter tout frottement et/ou appui de cette électrode 2 sur les tôles 1 provoquant des marquages, rayures ou déformations des tôles 1.

En pratique, dans le cas d'un procédé de soudage par résistance, la valeur de cette distance est comprise entre environ 5 mm et environ 15 mm et est appelée course de détalonnage.

A la suite de cette phase de positionnement de la pince par rapport à l'assemblage de tôles 1, le degré de liberté supplémentaire mentionné ci-dessus est libéré sur la pince, de sorte que le sous-ensemble mobile intégrant les électrodes et bras fixes et mobiles (2, 3, 8 et 9) et l'actionneur de soudage 4 peut alors effectuer un mouvement relatif par rapport à son bâti 10, ce mouvement relatif, autorisé par le module 11 ou 21 précité, pouvant être une translation, parallèle à celle du bras mobile 8, comme sur la pince en C des figures 1 à 3, ou une rotation autour de l'axe 13, comme sur la pince en X de la figure 4, cette opération, dénommée opération d'accostage, ayant pour but de permettre à l'électrode 2 du bras fixe 3 de venir au contact de l'assemblage de tôles 1 à souder.

Idéalement, ce mouvement d'accostage doit être réalisé complètement, sans pour autant entraîner un effort ou un choc susceptible de déformer les tôles 1, alors que ce mouvement doit être assuré sans connaître avec exactitude l'écart entre les positions théorique et réelle de l'assemblage de tôles 1 et de l'électrode fixe 2, pour différentes masses de la pince et différentes positions de son centre de gravité, et quelle que soit l'inclinaison de la pince dans l'espace.

A la suite de ou simultanément à cette opération d'accostage, l'actionneur de soudage 4 est commandé et déplace le bras mobile 8 de sorte que l'électrode mobile 9 vient se refermer vers l'électrode fixe 2 en enserrant, entre les deux électrodes 2 et 9, l'assemblage de tôles 1. Après l'entrée en contact de l'électrode mobile 9 avec les tôles 1, il se déroule une phase d'application et de montée de l'effort de soudage. Or, lors d'une fermeture à vide de la pince (en l'absence de tôles 1), la position du point de contact entre les électrodes fixe 2 et mobile 9 vient dériver en fonction de la différence de flexibilité entre le bras fixe 3 et le bras mobile 8, l'importance de cette dérive ou déplacement étant directement proportionnelle à la valeur de l'effort appliqué.

En conséquence, pour éviter toute déformation des tôles 1, il est nécessaire que la position de la pince (de ses électrodes 2 et 9) soit corrigée tout au long de la phase de montée de l'effort, de sorte que le point de contact entre les électrodes 2 et 9 corresponde en permanence à la position réelle de l'assemblage de tôles 1, cette opération étant dénommée opération d'équilibrage ou de centrage de la pince sur l'assemblage de tôles 1.

De même que pour l'opération d'accostage, pour une pince d'une masse définie, cette opération d'équilibrage doit idéalement pouvoir être assurée de façon autonome et avec la même qualité pour toutes les inclinaisons de la pince dans l'espace.

D'une manière générale, lorsque le point naturel de contact entre les électrodes 2 et 9 se trouve déplacé du côté du bras fixe 3, on parle de sous-accostage, et, inversement, lorsque ce point naturel de contact est déplacé du côté du bras mobile 8, on parle de sur-accostage.

Les conséquences d'une opération d'accostage et/ou d'une opération d'équilibrage pas assurée(s) ou mal assurée(s) sont un risque de produire une déformation des tôles 1 qui deviendrait irréversible du fait du dépassement de la contrainte de limite élastique de ces mêmes tôles une fois l'assemblage par soudage réalisé, et un déséquilibre d'effort entre les deux électrodes 2 et 9 (perte d'effort sur le bras fixe 3 en cas de sur-accostage, augmentation de l'effort en cas de sous-accostage) qui provoque une dégradation de la qualité du procédé d'assemblage. En effet, l'importance de la déformation des tôles 1 par rapport au déséquilibre d'effort entre les deux électrodes 2 et 9 est fonction de la rigidité de l'assemblage et de la position des moyens de préhension.

Enfin, à la suite des opérations d'accostage et d'équilibrage, l'opération de soudage peut être réalisée avec la création du point d'assemblage. A la suite de quoi, il est nécessaire d'effectuer une opération de retour et maintien de la pince en position de référence, dénommée opération de détalonnage. Dans la position dite détalonnée, les deux électrodes 2 et 9 sont écartées de l'assemblage de tôles 1, dans une position initiale à partir de laquelle l'opération d'accostage, pour le point de soudure suivant, peut être commandée. Idéalement, l'opération d'équilibrage doit pouvoir s'effectuer pour toutes les orientations de la pince dans l'espace et préférablement d'une façon autonome sans réglage particulier.

Comme indiqué précédemment, dans les cas d'application où la pince est fixée sur un support et l'assemblage de tôles 1 à souder transporté par un robot manipulateur, la problématique reste la même, avec toujours la nécessité d'opérations d'accostage et d'équilibrage de la pince sur l'assemblage de tôles 1, puis de détalonnage (retour en position de référence), seule l'inclinaison de la pince, dans ce cas, n'étant plus une variable.

Dans les pinces de soudage par résistance de l'état de la technique et du type précédemment indiqué, selon les figures 1 à 4, les opérations d'accostage, d'équilibrage et de détalonnage sont rendues possibles grâce au degré de liberté supplémentaire, par translation du sous-ensemble mobile (2, 3, 4, 8, 9) par rapport au bâti 10 sur les pinces en C, ou par basculement (rotation) du sous-ensemble mobile autour d'un axe 13 du bâti 10 sur les pinces en X, et sont assurées grâce au module 11 ou 21, respectivement dans les types de pinces en C ou en X, qui comprend essentiellement au moins une cassette 11a ou 21a de guidage en translation et d'équilibrage élastique par des ressorts, et au moins un actionneur 11b ou 21b d'accostage, de détalonnage et de blocage et maintien du sous-ensemble mobile en position détalonnée, cet actionneur 11b ou 21b pouvant présenter, lorsque la cassette de guidage ne comporte pas de ressort d'équilibrage, au moins deux moyens élastiques d'équilibrage sollicitant de manière antagoniste au moins un organe de cet actionneur qui est solidaire en déplacement de ladite cassette, par exemple un actionneur pneumatique à deux chambres de gaz sous pression de part et d'autre d'un piston relié rigidement par la tige de l'actionneur à un coulisseau monté coulissant en translation dans la cassette, afin de réaliser deux moyens élastiques antagonistes d'équilibrage.

Dans les modules d'équilibrage 11 des figures 1 à 3 et 21 de la figure 4, les fonctions d'accostage et de détalonnage sont associées à la fonction d'équilibrage, et les moyens de mise en oeuvre de ces trois fonctions sont combinés, et permettent soit un mouvement linéaire du sous-ensemble mobile, encore appelé chariot, comprenant les deux bras 3, 8, les deux électrodes 2, 9 et l'actionneur de soudage 4, par rapport au bâti 10 rigidement fixé au support (voir figures 1 à 3), soit un mouvement de rotation du sous-ensemble mobile par rapport au bâti 10 (voir figure 4).

Sur les figures 1 à 4, chacun des modules d'équilibrage 11 et 21 comprend une cassette de guidage linéaire 11a ou 21a, remplissant également la fonction supplémentaire d'accostage et d'équilibrage par des ressorts antagonistes, et un actionneur linéaire de détalonnage 11b ou 21b.

Lorsque les trois fonctions combinées sont réalisées par des mouvements de basculement (rotation) du sous-ensemble mobile par rapport au bâti 10, les moyens de mise en oeuvre peuvent être transposés à partir de ceux mentionnés ci-dessus et comprendre au moins un actionneur rotatif de détalonnage ainsi qu'au moins une cassette de guidage en rotation et d'accostage et équilibrage par au moins deux ressorts de torsion antagonistes.

Sur les figures 1 à 3, la pince en C de l'état de la technique a son module 11 d'équilibrage, accostage et détalonnage constitué d'une cassette 11a de guidage en translation, d'accostage et d'équilibrage à ressorts, et d'un actionneur 11b de détalonnage qui est un actionneur à simple effet, généralement pneumatique ou hydraulique.

La cassette 11a comporte un corps rigide rectangulaire 22, dans chacun des deux grands côtés opposés duquel est ménagé l'un respectivement de deux évidements identiques, traversés longitudinalement chacun par l'une respectivement de deux colonnes de guidage 23, identiques, espacées, parallèles entre elles et aux grands côtés du corps 22, fixées au corps 22 par leur deux extrémités, et montées coulissantes chacune dans l'un respectivement de deux coulisseaux ou manchons tubulaires identiques 24, parallèles et solidaires du bâti 10, tandis que le corps 22 est fixé rigidement sous le corps 5 de l'actionneur de soudage 4.

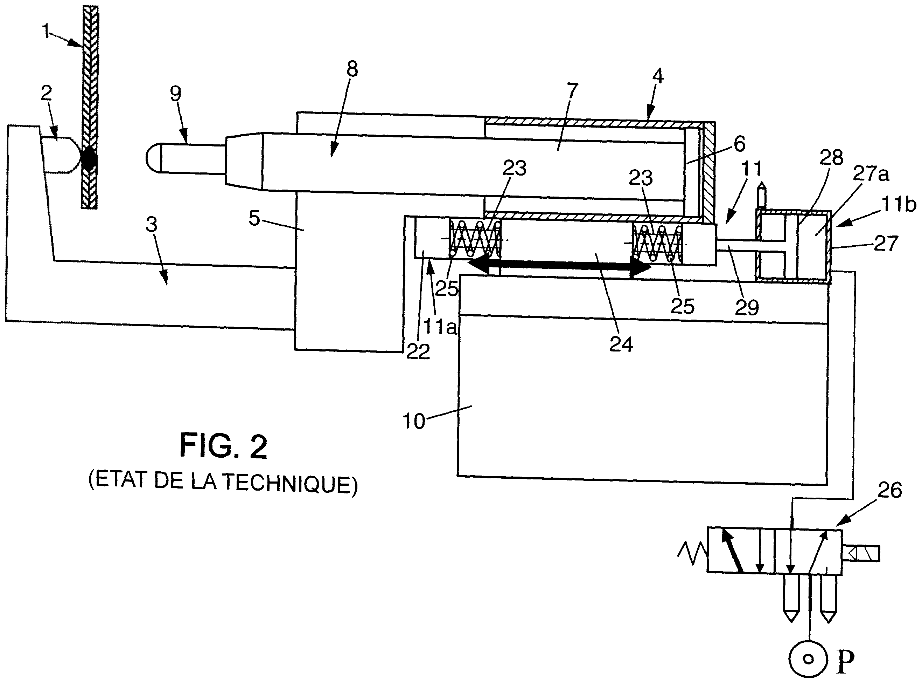

Les deux parties d'extrémité axiale opposées de chaque colonne 23 qui ressortent de part et d'autre du manchon 24 correspondant sont entourées chacune par l'un respectivement de deux ressorts hélicoïdaux 25, identiques et antagonistes, prenant appui par une extrémité axiale sur le corps 22, à l'extrémité correspondante de l'évidement correspondant, et par l'autre extrémité axiale sur l'extrémité axiale correspondante du manchon 24 correspondant. Ainsi, quatre ressorts d'équilibrage 25 prennent appui sur les manchons 24 rigidement fixés au bâti 10 pour solliciter le corps 22 de la cassette 11a, et donc aussi le sous-ensemble mobile qui lui est rigidement lié, axialement d'un côté ou de l'autre, pour équilibrer la pince, après que le sous-ensemble mobile (2, 3, 4, 8, 9) a été translaté suite au mouvement d'accostage depuis la position détalonnée (initiale de référence) de la figure 1 à la position d'équilibrage de la figure 2, par inversion des deux positions du distributeur fluidique de commande 26,interposé entre l'actionneur 11b d'une part, et,d'autre part, une conduite d'alimentation en fluide sous pression et une conduite de retour de fluide.

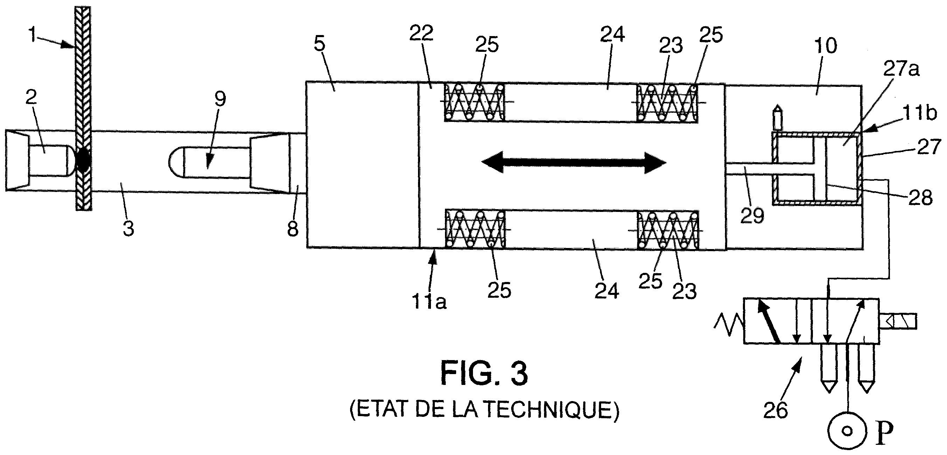

Initialement, le sous-ensemble mobile a été amené en position détalonnée (figure 1), dans laquelle l'électrode fixe 2 est écartée des tôles 1, par admission de fluide sous pression dans la chambre de travail 27a délimitée dans le cylindre 27 de l'actionneur 11b par le piston 28 qui est solidaire par la tige 29 du corps 22 de cassette 11a, jusqu'à amener le piston 28 en butée contre le cylindre 27. Ce déplacement du piston 28 et de la tige 29 entraîne la translation de l'ensemble du corps 22 de cassette 11a avec le sous-ensemble mobile (2,3,4,8,9) dans le sens qui comprime les ressorts 25 à droite des manchons 24 et détend les ressorts 25 à gauche des manchons 24. Le sous-ensemble mobile est alors lié de façon rigide au bâti 10 et la pince se trouve en position de référence, dite détalonnée. L'inversion du distributeur 26 commande l'accostage de l'électrode fixe 2 contre les tôles 1 par la vidange de la chambre de travail 27a précédemment sous pression dans l'actionneur 11b, sous l'effet de la détente des ressorts 25 préalablement comprimés, entraînant la translation en sens opposé du corps 22 de cassette 11a avec le sous-ensemble mobile (2,3,4,8,9), ainsi libéré de sa butée, jusqu'à ce que le sous-ensemble mobile et le corps 22 de la cassette 11a se trouvent en équilibre entre les deux paires de ressorts 25 antagonistes (voir figures 2 et 3).

La course de l'opération d'accostage dépend de la raideur et de la tension des ressorts 25, de la masse et de l'inclinaison de la charge à équilibrer, et des frottements éventuels pouvant freiner le déplacement de la charge. Lorsque la position d'équilibre a été atteinte, le sous-ensemble mobile conserve une certaine souplesse axiale, grâce aux ressorts 25.

Dans cet exemple, le cylindre 27 de l'actionneur 11b est rigidement fixé, comme les manchons 24, au bâti 10, et le corps 22 de la cassette 11a est rigidement fixé au sous-ensemble mobile. En variante, les manchons 24 peuvent être solidaires du sous-ensemble mobile, et le corps de cassette 22 solidaire du bâti 10, auquel cas la tige 29 du piston 28 de l'actionneur 11b entraîne les manchons 24 en traversant le corps 22. En variante encore, le cylindre 27 de l'actionneur 11b peut être solidaire de celui du ou des éléments, parmi le corps 22 et les manchons 24, qui est ou sont solidaire(s) du sous-ensemble mobile, auquel cas la tige 29 du piston 28 prend appui sur l'autre ou les autres des éléments précités qui est ou sont solidaires du bâti 10, pour déplacer le sous-ensemble mobile en translation par rapport au bâti 10, contre l'action ou sous l'action des ressorts 25.

Dans ces variantes, comme dans la pince des figures 1 à 3, le sous-ensemble mobile conserve une certaine souplesse axiale, grâce aux ressorts 25.

Toutefois, ces réalisations se heurtent à une contradiction entre, d'une part, la nécessité d'équilibrer sur une faible course une masse d'outil importante, quelle que soit l'orientation de la pince, d'où la nécessité d'utiliser des ressorts de raideur importante, et, d'autre part, le besoin d'une souplesse maximale de ces mêmes ressorts 25 lors d'opérations d'auto-équilibrage de la pince sur les tôles 1.

En pratique, ces réalisations ne sont que peu satisfaisantes, difficiles à mettre en oeuvre et ne sont applicables que dans le cas où la masse de la pince est limitée, et/ou pour des assemblages de tôle 1 de forte épaisseur (l'assemblage de tôles 1 présentant une bonne rigidité) et/ou pour des changements limités de l'orientation de la pince par rapport à un axe vertical.

Sur une variante de pince en C, la cassette ne diffère de celle 11a des figures 1 à 3 que par l'absence des ressorts 25, de sorte qu'elle ne remplit pas la fonction d'accostage et d'équilibrage élastique, mais uniquement celle de guidage en translation du sous-ensemble mobile par rapport au bâti 10 grâce aux colonnes 23 et aux manchons-coulisseaux 24. La fonction d'accostage et d'équilibrage est alors assurée par l'actionneur 11b de détalonnage, qui est un vérin pneumatique à double effet, dont le cylindre 27 est solidaire du bâti 10 et la tige 29 du piston 28 solidaire du corps de cassette 22, lui-même solidaire du corps 5 de l'actionneur de soudage 4. La commande pneumatique est assurée par le distributeur à deux positions 26 coopérant avec une vanne de régulation (non représentée) permettant de piloter ou bloquer l'alimentation ou la vidange de l'une 27a des deux chambres de travail de l'actionneur 11b en air comprimé, qui est vidangé de l'autre chambre de travail ou alimenté vers cette autre chambre au travers du distributeur 26.

Dans un premier temps, la chambre 27a du vérin 11b est alimentée, tandis que l'autre chambre est vidangée au travers du distributeur 26 de façon à repousser le piston 28 en butée contre le cylindre 27, et donc, par la tige 29, le sous-ensemble mobile en position de détalonnage (position de référence en butée par rapport au bâti 10) de sorte que ce sous-ensemble mobile est alors lié de façon rigide au bâti 10, l'électrode fixe 2 étant écartée des tôles 1. La vanne de régulation permet d'isoler l'actionneur pneumatique 11b dans cette position, pour maintenir la pince dans cette position détalonnée.

Puis les opérations d'accostage et d'équilibrage sont réalisées en commandant l'inversion du distributeur 26 afin de remettre sous pression l'autre chambre et en régulant grâce à la vanne la différence de pression entre les deux chambres du vérin 11b, de façon à déplacer le piston 28 et la tige 29, et donc le sous-ensemble mobile, de sorte à amener l'électrode fixe 2 en contact avec les tôles 1 (accostage) et de façon à compenser l'effet de la masse de la charge (équilibrage).

Grâce à la régulation de la différence de pression entre les chambres du vérin et à la différence de surface active entre les 2 faces opposées du piston 28 liée à la présence de la tige 29, la pince est équilibrée de façon fine sur toute la course nécessaire à l'opération d'accostage. En utilisant, comme distributeur 26 et vanne de régulation, au moins un régulateur à commande proportionnelle, l'opération d'équilibrage peut être réalisée pour toutes les orientations de la pince dans l'espace au cours de la mise en oeuvre du procédé de soudage.

L'accostage, l'équilibrage et le détalonnage sont donc pneumatiques sur cette variante de pince en C.

Dans cette dernière variante, les deux chambres de gaz sous pression de part et d'autre du piston 28 relié rigidement par la tige 29 au corps de cassette 22, et donc au sous-ensemble mobile, réalisent les deux moyens élastiques antagonistes d'équilibrage.

Toutefois, en pratique, ce principe d'équilibrage, d'accostage et de détalonnage pneumatiques présente l'inconvénient de nécessiter l'apport d'énergie pneumatique sur la pince. Ceci est coûteux, tout particulièrement lorsque l'actionneur principal 4 entraînant le bras mobile 8 est électrique. En effet, dans ce cas, les fonctions détalonnage d'accostage et d'équilibrage sont les seules fonctions nécessitant de l'air comprimé.

Par ailleurs, les nombreuses contraintes de procédé et liées aux produits à réaliser ne permettent pas de proposer une solution unique compatible avec les besoins des différents utilisateurs. En conclusion, les réalisations pneumatiques, bien que pouvant être performantes, ne sont pas totalement satisfaisantes.

De manière analogue, la pince en X de la figure 4 bénéficie d'un équilibrage à ressorts par la cassette de guidage 21a du module 21 réalisant également la fonction d'accostage, alors que la fonction de détalonnage est assurée par l'actionneur 21b de type vérin à simple effet, pneumatique ou hydraulique, tandis qu'en variante le module d'équilibrage 21 peut ne pas comprendre de cassette de guidage 21a, mais uniquement un actionneur 21b du type vérin à double effet, pneumatique, remplissant les fonctions d'accostage, d'équilibrage, et de détalonnage de la pince.

Plus précisément, sur la figure 4, la cassette de guidage et d'équilibrage 21a comprend un piston 31, solidaire d'une tige 32 montée pivotante sur le support de bras 12 autour d'un axe parallèle à l'axe de rotation 13, et le piston 31 est monté coulissant dans un cylindre 33 monté pivotant, par son extrémité opposée à celle traversée par la tige 32, sur la console rigide 17 du bâti 10, autour d'un axe également parallèle à l'axe de rotation 13, le cylindre 33 logeant deux ressorts 34 hélicoïdaux et antagonistes prenant chacun appui sur l'une des extrémités du cylindre 33, d'un côté, et de l'autre, contre l'une respectivement des deux faces opposées du piston 31. Ainsi, les deux ressorts 34 assurent l'équilibrage du sous-ensemble mobile en rotation autour de l'axe 13 par rapport au bâti 10, dans les mêmes conditions que les ressorts 25 de la pince en C des figures 1 à 3, et avec les mêmes inconvénients résultant du besoin d'avoir des ressorts à la fois souples et de raideur importante, ce qui est contradictoire.

L'actionneur linéaire à simple effet 21b de la pince en X de la figure 4 a son cylindre 35 et sa tige 36 montés pivotants, par leurs extrémités opposées, respectivement sur la console rigide 17 du bâti 10 et sur le support de bras 12, autour d'axes parallèles à l'axe 13, et le piston 37 solidaire de la tige 36 délimite dans le cylindre 35 une chambre de travail 35a (du côté de la tige 36) qui est sélectivement mise en communication, par le même distributeur fluidique 26 à deux positions des figures 1 à 3, avec une alimentation en fluide sous pression ou une conduite de retour de ce fluide, l'alimentation de cette chambre de travail 35a en fluide sous pression permettant de déplacer le piston 37 en butée contre la partie montée pivotante du cylindre 35, ce qui fait pivoter le support de bras 12, et donc le sous-ensemble mobile supporté par ce dernier, en rotation autour de l'axe 13 pour amener et maintenir ce sous-ensemble mobile en position de détalonnage (position initiale de référence) dans laquelle l'électrode fixe 2 est écartée des tôles 1, tandis qu'à l'intérieur de la cassette 21a le piston 31 est tiré vers l'extérieur du cylindre 33 (côté de la tige 32), en comprimant ainsi l'un des ressort 34 et en détendant l'autre. En commandant l'inversion du distributeur de commande 26, la chambre de travail 35a de l'actionneur 21b est mise hors pression grâce à la mise en communication avec un échappement 26a. Sous l'action des ressorts d'équilibrage 34, le piston 31 retrouve une position d'équilibre à l'intérieur de la cassette 21a en faisant pivoter le support de bras 12 par rapport à la console 17 rigide du bâti 10, ce pivotement du support de bras 12 exerçant simultanément une traction sur la tige 36 de l'actionneur 21b, dont le piston 37 est déplacé dans le sens qui tend à réduire le volume de la chambre de travail 35a, et de sorte que l'électrode fixe 2 au bout du bras fixe 3 lié au bras support 12 vienne en contact avec les tôles 1, en position d'accostage et d'équilibrage.

En variante, l'équilibrage pneumatique de la pince peut être assuré par l'actionneur 21b qui est alors, comme déjà mentionné, un vérin pneumatique à double effet, commandé par le distributeur 26 et une vanne de régulation (non représentée) utilisés dans les mêmes conditions pour assurer l'équilibrage pneumatique de la variante pneumatique de la pince en C précédemment mentionnée. En effet, par la commande du distributeur 26, l'autre chambre de l'actionneur 21b est reliée à un échappement et donc mise hors pression. Le piston 37 vient alors en butée contre l'extrémité pivotante du cylindre 35 ce qui permet de maintenir la pince dans cette position de détalonnage.

Puis, les opération d'accostage et d'équilibrage sont réalisées en commandant l'inversion du distributeur 26 afin de remettre sous pression l'autre chambre et en régulant grâce à la vanne la différence de pression entre les deux chambres de travail du vérin, de façon à compenser le couple autour de l'axe de rotation 13 créé par la masse et la position du centre de gravité du sous-ensemble mobile, et, comme dans la variante précitée de pince en C, on utilise de préférence au moins un régulateur à commande proportionnelle pour que l'opération d'équilibrage puisse être réalisée avec la même souplesse pour toutes les orientations de la pince dans l'espace, au cours du procédé de soudage.

Mais cette variante de pince en X à détalonnage, accostage et équilibrage pneumatiques, présente les mêmes inconvénients que la variante pneumatique analogue de pince en C, tenant à la nécessité d'apport d'énergie pneumatique sur l'outil.

Une autre solution consiste à supprimer entièrement sur la pince le degré de liberté lié à cette fonction d'équilibrage. En effet, on peut considérer que le robot est renseigné, avec une précision suffisante, sur l'évolution de la géométrie de l'outil liée, d'une part, à l'usure des électrodes, et, d'autre part, à la dérive du point de contact entre les électrodes lors de l'application de l'effort.

Grâce à la connaissance de ces valeurs, l'incertitude sur le positionnement relatif des tôles 1 est réduite et le robot peut réaliser de lui-même l'opération d'accostage, puis d'équilibrage de la pince sur l'assemblage de tôles 1.

Cette solution présente l'intérêt d'être économique, grâce à la suppression du degré de liberté sur le corps de pince, et d'être opérationnelle indépendamment de l'orientation de la pince dans l'espace.

Toutefois, cette solution implique :
- de connaître avec précision, et grâce à un contrôle régulier, le degré d'usure de l'électrode fixe 2,
- de connaître la dérive du point de contact entre les électrodes 2 et 9, lors de l'application de la charge,
- d'utiliser un vérin asservi 4 (généralement électrique) permettant de suivre la déformation de la pince lors de la montée en effort, et
- d'utiliser un robot spécialement programmé pour permettre la correction de position de la pince de façon synchronisée avec l'usure et la déformation de la pince.

L'opération d'équilibrage n'est pas souple et ne peut être réalisée qu'en visant pour consigne la position théorique des tôles 1, l'erreur de positionnement de celles-ci ne pouvant pas être prise en compte, avec, pour conséquence, soit une déformation des tôles 1, soit un déséquilibre d'effort venant nuire à la qualité du procédé de soudage.

Enfin, les temps nécessaires au robot pour corriger sa trajectoire sont relativement longs, et provoquent une perte de temps de cycle par rapport aux réalisations traditionnelles évoquées ci-dessus.

Pour ces raisons, le but de l'invention est de proposer une autre pince à enserrer des tôles, utilisée en association avec un bras manipulateur, et permettant d'offrir des fonctions d'accostage, d'équilibrage et de détalonnage (retour et maintien en position de référence de la pince) par des moyens uniquement électromécaniques, de façon autonome, sans réglage et pour toutes les orientations de l'outil dans l'espace.

A cet effet, l'invention propose une pince du type précédemment défini et connu par DE 202 14 970 U1 et qui se caractérise par les mesures techniques de la partie caractérisante de la revendication 1.

D'autres mesures techniques avantageuses font l'objet des revendications 2 à 29.

Avantageusement, l'actionneur d'équilibrage comprend un moteur électrique réversible. De plus, le système d'équilibrage est avantageusement également apte à bloquer ce sous-ensemble mobile dans une position par rapport au support, et notamment à amener le sous-ensemble mobile dans une position de référence fixe, dite position détalonnée, par rapport audit support.

Le module d'équilibrage comprend également, de préférence, au moins un détecteur de position, apte à détecter le déplacement dans ledit système d'équilibrage de la charge constituée par ledit sous-ensemble mobile et des organes qui lui sont solidaires en déplacement par rapport au support.

Un détecteur de position est de préférence également apte à commander l'actionneur d'équilibrage pour amener la charge dans sa position équilibrée.

Dans un premier mode de réalisation, ledit au moins un détecteur de position est un capteur de position continu, comprenant au moins un élément solidaire dudit support et relié à un circuit électronique de commande dudit actionneur d'équilibrage, et coopérant avec un second élément, solidaire dudit sous-ensemble mobile dans ses déplacements.

En outre, le détecteur de position est avantageusement également apte à commander le moteur pour entraîner la vis en rotation dans un sens qui déplace l'écrou de sorte à compenser ledit déplacement de la charge.

Cette réalisation présente l'avantage que la compensation, par le moteur électrique et le système vis-écrou, du déplacement de la charge à équilibrer dans le système d'équilibrage permet de repositionner la charge sur une position théorique de l'assemblage de tôles, sur la base des informations transmises par le détecteur de position au moteur, via un circuit de commande de ce dernier. Ce mode d'action fonctionne de manière autonome, sans réglage et quelle que soit l'orientation de la pince dans l'espace, et jusqu'à une certaine masse de l'outil, qui est fonction de la raideur et de la longueur du ou des ressorts choisis.

Selon un premier mode de réalisation, l'actionneur d'équilibrage fait fonction d'actionneur de détalonnage et est apte à être mis en rotation de façon à repousser, par le système vis-écrou, ladite charge à équilibrer jusqu'à amener une butée d'arrêt solidaire dudit système d'équilibrage contre une butée de fin de course de détalonnage, liée audit support.

Dans le but de sécuriser la position de la charge, l'actionneur d'équilibrage est avantageusement apte à poursuivre l'entraînement du système vis-écrou après mise en contact d'une butée d'arrêt dudit système d'équilibrage avec une butée de fin de course de détalonnage, jusqu'à la mise en contact de l'écrou contre un élément rigide interne audit système d'équilibrage.

Ledit élément rigide interne à la cassette peut être constitué par l'un de ressort antagoniste, qui est avantageusement un ressort hélicoïdal alors comprimé à spires sensiblement jointives, mais, de préférence, ledit élément rigide interne est une butée d'arrêt de l'écrou en translation sur la vis, et destinée à limiter la compression ainsi éventuellement la traction d'au moins un ressort d'équilibrage.

L'opération d'accostage est réalisée en commandant la rotation du moteur en sens inverse de celui de l'opération de détalonnage, le déplacement de l'écrou du système vis-écrou venant libérer la charge et la remettre en équilibre à l'intérieur du système d'équilibrage. La rotation du moteur est poursuivie jusqu'à ce que le détecteur de position indique que le sous-ensemble mobile a retrouvé la position correspondant au contact théorique entre l'extrémité du bras fixe, agencé en électrode fixe dans le cas d'une pince de soudage, et l'assemblage de tôles.

A cet effet, ledit capteur de position continue peut être avantageusement un capteur de position linéaire, comprenant au moins une tige s'étendant sensiblement parallèlement à la vis, et solidaire dudit actionneur d'équilibrage, ladite tige étant reliée à un circuit électronique de commande du moteur, et coopérant avec un élément solidaire dudit système d'équilibrage dans ses déplacements dans la direction de ladite vis et dudit déplacement en translation.

Cependant, afin de réduire le risque d'oscillation de la charge dans le système d'équilibrage , il est avantageux de remplacer le capteur de position continu par un détecteur de position qui comprend, d'une part, un capteur de fin de course, du type capteur de position à contact électrique, intégré dans ou associé à une butée de détalonnage et détectant la présence ou l'absence, contre ledit capteur de fin de course, d'un contact mobile intégré ou associé à une butée d'arrêt dudit système d'équilibrage, et, d'autre part, un autre capteur de position du type codeur, associé audit moteur pour commander une rotation du moteur positionnant ladite butée d'arrêt à une distance prédéterminée « d » de la position de détalonnage.

Ainsi, le capteur de fin de course peut indiquer que la charge a quitté la butée de détalonnage et se trouve donc en équilibre dans le système d'équilibrage. Le codeur associé au moteur permet alors de positionner l'écrou à la distance « d » à respecter, cette solution n'étant cependant valable que dans les cas où l'orientation de la pince n'est pas modifiée lors de la phase d'équilibrage. Mais tel est bien le cas, en pratique, dans des applications de soudage par résistance.

Afin d'optimiser la réalisation des fonctions de retour et surtout de maintien en position détalonnée, la pince selon l'invention peut comporter avantageusement des moyens auxiliaires et en particulier des moyens de préhension, aptes à fixer ledit sous-ensemble mobile et le système d'équilibrage en position de détalonnage, fixe par rapport audit support.

Selon des modes de réalisation alternatifs, lesdits moyens de préhension peuvent être agencés en moyens de fixation libérables combinés à ladite butée de fin de course de détalonnage, pour fixer contre cette dernière ladite butée d'arrêt dudit système d'équilibrage, afin de maintenir le sous-ensemble mobile en position de détalonnage. Ces moyens de fixation libérable peuvent être réalisés sous la forme d'un électro-aimant, d'une ventouse pneumatique ou électromagnétique, seuls ou associés à un système mécanique de préhension.

Dans une autre forme de réalisation, la pince comprend, éventuellement en plus, un poussoir, qui est un actionneur de détalonnage réalisé sous la forme d'un actionneur auxiliaire linéaire, distinct de l'actionneur d'équilibrage, et en direction d'action sensiblement parallèle à la vis du système vis-écran, et apte à solliciter ledit système d'équilibrage avec ledit sous-ensemble mobile pour le déplacer jusqu'au contact d'une butée d'arrêt dudit système d'équilibrage contre une butée de fin de course de détalonnage, permettant ainsi d'amener et de maintenir de façon rigide le système d'équilibrage et le sous-ensemble mobile en position de détalonnage, sans avoir besoin de solliciter le moteur électrique de l'actionneur d'équilibrage.

En d'autres termes, les moyens de préhension et/ou l'actionneur de détalonnage précités peuvent assurer la fonction de maintien en position détalonnée du sous-ensemble mobile à partir de l'instant où ce sous-ensemble mobile et le système d'équilibrage arrivent en contact avec la butée de fin de course de détalonnage, tandis qu'un actionneur de détalonnage distinct de l'actionneur d'équilibrage peut assurer les fonctions de retour et de maintien en position détalonnée du sous-ensemble mobile à partir d'une position d'équilibrage.

L'avantage de faire intervenir un actionneur auxiliaire de détalonnage, dans les cas où plusieurs points de soudure sont à réaliser en succession sans modification d'inclinaison de la pince, est que l'écrou du système vis-écrou est déjà pré-positionné sur sa position d'équilibrage pour les points de soudure qui suivent le premier point.

En outre, de tels moyens auxiliaires d'assistance apportent de nombreux autres avantages, notamment la limitation de la course réalisée par l'écrou du système vis-écrou, donc la réduction en conséquence du temps de réponse du système, de l'usure du système, ainsi que la limitation de l'amplitude et de la fréquence des mouvements alternatifs de compression et décompression des ressorts du système d'équilibrage, d'où une limitation de la sollicitation à la fatigue du système, et, en conséquence, la réduction de la puissance nominale et de la puissance maximale nécessaire pour le moteur électrique de l'actionneur d'équilibrage, avec un gain induit sur son coût d'obtention, et, enfin, l'utilisation d'un frein associé au moteur électrique de l'actionneur d'équilibrage est rendu inutile par la présence des moyens de préhension précités.

Dans une forme simple de réalisation, l'actionneur linéaire est un actionneur à simple effet avec rappel élastique, et de préférence fixé à l'actionneur d'équilibrage.

Selon un autre mode de réalisation, on utilise le mouvement de l'actionneur principal de la pince pour assurer les fonctions de retour et de maintien du sous-ensemble mobile comportant cet actionneur principal en position de détalonnage. Dans ce cas, l'actionneur de détalonnage est donc constitué par ledit actionneur principal du sous-ensemble mobile. Dans un exemple de réalisation, la tige dudit actionneur principal présente un évidement longitudinal délimité à une extrémité par une rampe formant came pour une tête à une extrémité d'un pion monté coulissant transversalement dans un alésage d'un corps d'actionneur principal, et dont l'autre extrémité est agencée en embout en V apte à s'engager transversalement dans un évidement en V ménagé dans une face externe dudit système d'équilibrage monté mobile en translation par rapport à un support du bras fixe et de guidage du bras mobile, de sorte que la rentrée de la tige de l'actionneur principal dans le corps de ce dernier entraîne un déplacement du pion radialement vers l'extérieur du corps d'actionneur et dans l'évidemment en V dudit système d'équilibrage en provoquant, par coopération de l'embout en V dudit pion et d'une rampe de l'évidemment en V dudit système, le déplacement en translation de cet dernier jusqu'à une position en butée en fin de course de détalonnage.

Dans les différents modes de réalisation, le moteur de l'actionneur d'équilibrage est, avantageusement, commandé par un circuit électronique de commande agencé en carte directement intégrée au moteur, ou audit système d'équilibrage, et est éventuellement équipé d'un frein de sécurité, et d'un réducteur de sortie.

Lorsque la pince est dans une configuration nécessitant l'intervention du frein de sécurité, le moteur comporte avantageusement un limiteur de couple et/ou un capteur de position, qui, après détection de l'arrivée d'une butée d'arrêt du système d'équilibrage en contact avec une butée de fin de course de détalonnage, puis après détection de l'arrivée dudit écrou en butée contre la butée de limitation de la course de l'écrou, coupe l'alimentation électrique du moteur et déclenche le serrage dudit frein de sécurité, afin de bloquer le moteur dans sa position, et ainsi de le protéger efficacement contre un risque de surchauffe.

Lorsque le dispositif permettant un déplacement suivant le degré de liberté supplémentaire est un dispositif de guidage en translation, il est avantageux que le dispositif de guidage en translation comporte au moins une colonne, parallèle à la direction de translation et solidaire en déplacement de l'un dudit sous ensemble mobile et dudit support, ladite au moins une colonne étant montée axialement coulissante dans au moins un manchon solidaire de l'autre dudit support et dudit sous-ensemble mobile.

En outre, le dispositif de guidage est avantageusement intégré audit système d'équilibrage, et comprend deux colonnes parallèles à la vis, de part et d'autre de cette dernière, et fixées dans ledit système d'équilibrage, de sorte à coulisser chacune dans l'un de deux manchons parallèles.

On comprend que l'on peut ainsi réaliser un module d'équilibrage électromécanique qui présente de nombreux avantages, notamment l'absence de besoin d'air comprimé, qui est opérationnel quelle que soit l'orientation de la pince dans l'espace, qui comprend une cassette d'équilibrage à ressorts dont le dimensionnement permet, dans une enveloppe acceptable, de conserver une bonne souplesse de la fonction d'équilibrage pour des masses importantes de pinces, ce qui a pour conséquence indirecte de permettre d'équilibrer, avec le sous-ensemble mobile, un nombre plus important de composants, en particulier d'intégrer un transformateur de soudage dans le sous-ensemble mobile. En outre, on peut appliquer à une pince selon l'invention les enseignements de la demande de brevet FR 06 04384 du Demandeur, de sorte que le module d'équilibrage est déporté à l'extérieur de l'ensemble constitué par ledit sous-ensemble mobile et ledit bâti. Ceci permet de simplifier grandement la pince, de proposer la fonction d'équilibrage en option, sans influence sur le prix de l'outil de base pour toutes les applications pour lesquelles cette fonction n'est pas demandée ou n'est pas nécessaire, et de conserver des robots standards sans compensation de trajectoire liée à la dérive du point de soudage ni perte de temps de cycle.

Ainsi, le module d'équilibrage peut être monté en interface entre deux parties du support, dont une première partie est solidaire dudit bâti et/ou dudit sous-ensemble mobile, et la seconde partie constitue le reste du support ou est solidaire du reste du support.

Mais, avantageusement, ledit module d'équilibrage est monté en interface entre ledit support et ledit bâti et/ou sous-ensemble mobile.

En particulier, ledit module d'équilibrage peut se fixer sur un flanc du corps de l'actionneur principal et/ou dudit bâti supportant ledit sous-ensemble mobile.

Selon l'invention, le module d'équilibrage peut être mis en place sur une pince de type en C, à mouvement linéaire du bras mobile par rapport au bras fixe, de sorte que les déplacements en translation autorisés par ledit module d'équilibrage sont sensiblement parallèles aux déplacements du bras mobile, et donc sensiblement perpendiculaires au plan d'assemblage des tôles.

Mais le module d'équilibrage peut, selon l'invention, être également mis en place sur une pince de type en X, à mouvement de rotation du bras mobile par rapport au bras fixe, de sorte que les déplacements en translation autorisés par ledit module d'équilibrage sont sensiblement perpendiculaires au plan d'assemblage des tôles, et donc sensiblement parallèles à la direction des deux extrémités de bras, bout à bout en position de fermeture de la pince.

Dans un mode de réalisation préféré, ledit module d'équilibrage est apte à se monter sur ledit bâti , dans l'une ou l'autre d'au moins deux positions autorisant des déplacements en translation sensiblement parallèle à respectivement l'une ou l'autre d'au moins deux directions inclinées entre elles, et de préférence sensiblement perpendiculaires entre elles, dans le plan d'une face de montage sur le bâti, selon que la pince est du type en C, ou en X, respectivement à déplacements en translation ou en rotation du bras mobile par rapport au bras fixe.

D'autres caractéristiques et avantages de l'invention ressortiront de la description donnée ci-dessous, à titre non limitatif, d'exemples de réalisations décrits en référence aux dessins annexés sur lesquels :
- la figure 1 est une vue schématique en partie en coupe axiale et en partie en élévation latérale d'une pince en C de l'état de la technique à module d'équilibrage à ressorts, en position détalonnée.
- la figure 2 est une vue analogue à la figure 1 représentant la pince en C en position d'accostage / d'équilibrage ;
- la figure 3 est une vue schématique, en partie en plan et en partie en coupe horizontale, de la pince en C dans la même position que sur la figure 2 ;
- la figure 4 est une vue analogue à la figure 1 d'une pince en X de l'état de la technique, à module d'équilibrage à ressorts, en position d'accostage / d'équilibrage ;
- la figure 5 est une vue analogue à la figure 2 d'une pince en C à module d'équilibrage selon l'invention, avec capteur de position linéaire, dans une position voisine de l'équilibre et en cours de fermeture ou d'ouverture de la pince ;
- la figure 6 est une vue analogue à la figure 3 pour la pince selon l'invention de la figure 5 ;
- la figure 7 est une vue analogue à la figure 5 de la pince en position détalonnée ;
- la figure 8 est une vue analogue à la figure 7 de la pince en cours d'équilibrage, dans une position intermédiaire entre celles des figures 5 et 7 ;
- la figure 9 est une vue analogue à la figure 8 et représentant la position d'équilibrage, mais pince ouverte ;
- la figure 10 est une vue analogue à la figure 9, représentant la position d'équilibrage, mais pince fermée ;
- la figure 11 est une vue analogue à la figure 10 mais dans une orientation verticale de la pince avec les bras en haut ;
- la figure 12 est une vue analogue à la figure 11, dans une orientation verticale de la pince, mais avec les bras en bas ;
- la figure 13 est une vue analogue à la figure 10 représentant la pince au début du retour en position de détalonnage, et à considérer indépendamment de l'orientation de la pince dans l'espace ;
- la figure 14 est une vue analogue à la figure 13, représentant une position consécutive à celle de la figure 13, après ouverture du bras mobile ;
- la figure 15 est une vue analogue à la figure 14, de la pince en cours de détalonnage, dans une position intermédiaire entre celles des figures 14 et 16
- la figure 16 est une vue analogue à la figure 15 en position de sécurisation de la pince en position détalonnée par contact de l'écrou avec une butée de fin de course d'écrou ;
- la figure 17 est une vue analogue à la figure 16 d'une pince sans capteur de position linéaire, et en cours de déplacement de la charge vers sa position d'équilibre, par action de l'actionneur d'équilibrage ;
- la figure 18 est une vue analogue à la figure 17 d'une pince avec un actionneur auxiliaire de détalonnage, et en position d'équilibrage et d'accostage ;
- la figure 19 est une vue analogue à la figure 6 de la pince avec actionneur auxiliaire de détalonnage de la figure 18 ;
- la figure 20 est une vue analogue à la figure 18 de la pince en position détalonnée par l'actionneur auxiliaire de détalonnage et sans commande de l'actionneur d'équilibrage ;
- la figure 21 est une vue schématique, en partie en élévation latérale et en partie en coupe, d'une pince en C avec module d'équilibrage selon l'invention, avec mise en place du module d'équilibrage sur un côté de la pince et avec guidage linéaire parallèle au vecteur *̅n̅*̅ normal au plan d'assemblage des tôles ;
- la figure 22 est une vue schématique de face de la pince en C avec module d'équilibrage selon l'invention de la figure 21 ;
- les figures 23 et 24 sont des vues analogues respectivement aux figures 21 et 22 pour une pince en X, équipée du même module d'équilibrage que la pince en C des figures 21 et 22, également monté sur l'un des côtés de la pince et avec son guidage linéaire parallèle au vecteur *̅n̅*̅ perpendiculaire au plan d'assemblage des tôles ; et
- les figures 25 et 26 sont des vues schématiques en partie en coupe axiale et en partie en élévation latérale, d'un autre exemple de pince à module d'équilibrage selon l'invention, utilisant l'actionneur principal comme actionneur de détalonnage, respectivement en position fermée et équilibrée, et en position ouverte et en butée (détalonnée).

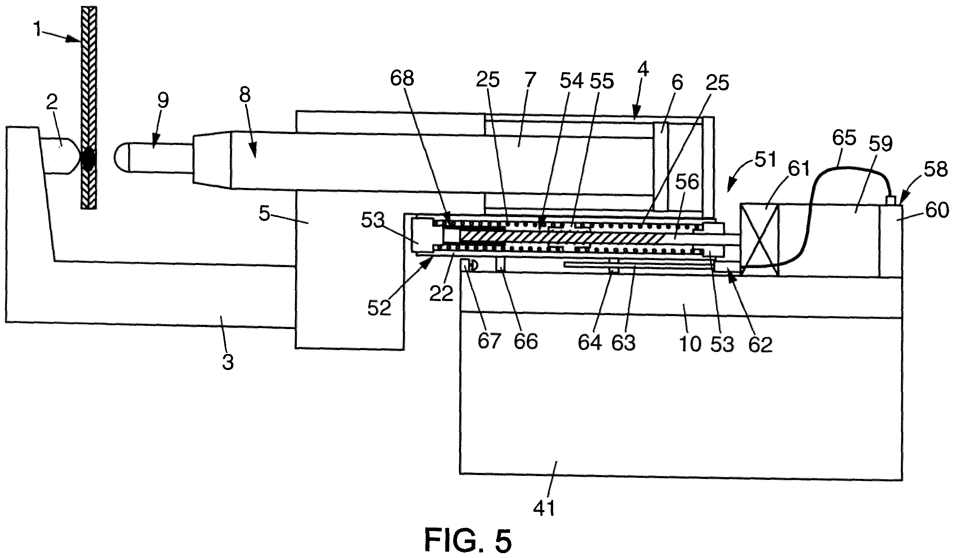

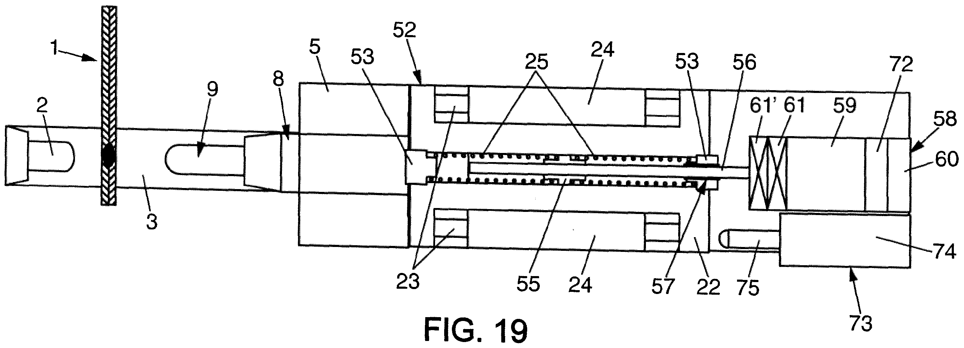

Selon l'invention, comme représenté sur les figures 5 à 26 et décrit ci-dessous, les pinces en C, comme en X, ayant la même structure de base et fonctionnant selon le même principe que les pinces analogues de l'état de la technique, sont également équipées d'un module d'équilibrage, d'accostage et de préférence également de détalonnage, d'une structure particulière à l'invention, mais pour mettre en oeuvre les mêmes principes de base que les modules analogues de l'état de la technique. Pour cette raison, sur les figures 5 à 26, les mêmes références numériques sont utilisées pour désigner les composants identiques ou analogues des pinces de l'invention comme des pinces de l'état de la technique, et des modules d'équilibrage, d'accostage et de détalonnage de l'invention comme ceux de l'état de la technique. Cependant, les pinces équipées de tels modules selon l'invention se distinguent des pinces équipées de tels modules selon l'état de la technique essentiellement par la structure des modules, qui, optionnellement, peuvent avoir une position différente de la position conventionnelle, et être déportés à l'extérieur de la pince proprement dite, à savoir de l'ensemble constitué par le sous-ensemble mobile de chaque pince et le bâti correspondant, conformément aux enseignements de la demande de brevet FR0604389 du demandeur.

Les figures 5 à 16 représentent un premier exemple de pince selon l'invention, qui est une pince à souder par résistance un assemblage de tôles 1 entre les électrodes de soudage 2 et 9, à l'extrémité respectivement de bras fixe 3 et mobile 8, respectivement supportés et guidés par un support solidaire du corps 5 de l'actionneur principal 4 ou vérin de soudage, dont le piston 6 est solidaire de la tige 7 prolongée par le bras mobile 8, ces éléments constituant un sous-ensemble mobile, ou chariot, relié au bâti 10 de la pince, auquel est intégré le transformateur de soudage 41, par exemple fixé sur le poignet d'un robot agencé en bras manipulateur, par intermédiaire d'un module d'équilibrage 51 autorisant, entre le sous-ensemble précité, ou tout ensemble le comprenant, d'une part, et, d'autre part, le bâti 10, le transformateur 41 et leur support commun, un degré de liberté en translation parallèlement à la direction de translation du bras mobile 8 manoeuvré par l'actionneur 4.

Ce module d'équilibrage 51, destiné à équilibrer les efforts exercés sur les extrémités, en l'occurrence les électrodes 2 et 9, des bras fixe 3 et mobile 8 en position de fermeture, comportent, à cet effet, un dispositif de déplacement en translation du corps 5, et donc du sous-ensemble mobile, par rapport au bâti 10, et donc par rapport au support de ce dernier, ainsi qu'un système d'équilibrage comprenant, d'une part, un dispositif souple, et, d'autre part, un actionneur d'équilibrage, le dispositif souple étant également lié au corps 5, et donc au sous-ensemble mobile, et comprenant au moins un ressort d'équilibrage, tel qu'un ressort hélicoïdal 25, s'étendant sensiblement parallèlement à la direction de translation du dispositif de déplacement et sollicitant, dans cette direction, un organe lié au bâti 10, et donc à son support, tandis que l'actionneur d'équilibrage, également lié au bâti 10, manoeuvre ledit organe sollicité par le ou les ressorts du dispositif souple de sorte à amener le corps 5, et donc le sous-ensemble mobile, dans une position d'équilibrage par rapport au bâti 10, et donc par rapport à son support.

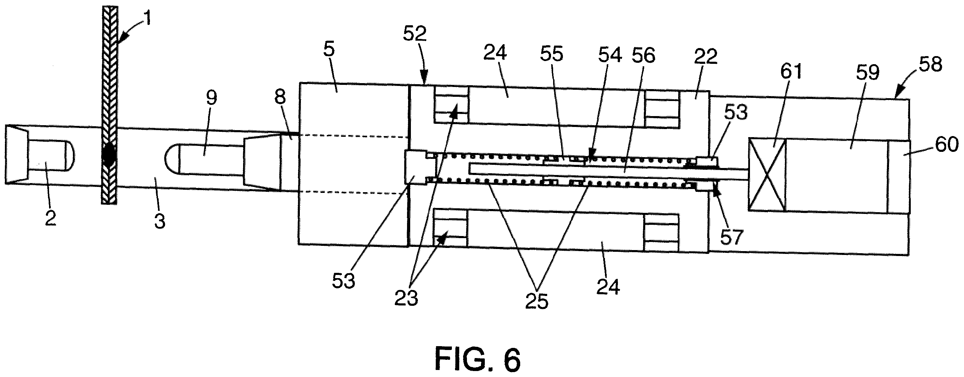

Dans cet exemple, le dispositif de déplacement en translation et le dispositif souple sont intégrés l'un à l'autre et réalisés sous la forme d'une cassette 52 de guidage en translation et d'équilibrage élastique, la cassette 51 comportant, comme représenté sur les figures 5 et 6, un corps de cassette 22, de forme générale parallélépipédique, présentant deux évidements longitudinaux, dans chacun desquels est fixée l'une respectivement de deux colonnes de guidage 23 parallèles entre elles et à la direction de translation, de part et d'autre d'un passage longitudinal et central logeant deux ressorts d'équilibrage antagonistes 25, précontraints en opposition, prenant chacun appui contre l'un respectivement de deux écrous 53 de précontrainte des ressorts d'équilibrage 25, chaque écrou 53 fermant l'une respectivement des extrémités longitudinales du passage central du corps de cassette 22, et les deux ressorts 25 sollicitant en opposition l'écrou 55 d'un système vis-écrou 54, dont la vis 56, du type vis à billes ou vis à filotage trapézoïdal, s'étend axialement dans le passage central du corps 22 et est vissée dans l'écrou 55, en traversant l'un des deux écrous 53 de précontrainte par l'intermédiaire d'un palier 57 (voir figure 6) permettant la rotation et la translation axiale de la vis 56 dans cet écrou 53, le corps de cassette 22 étant solidaire en translation du corps 5 du sous-ensemble mobile et guidé dans cette translation par les colonnes de guidage 23 montées axialement coulissantes chacune dans l'un de deux manchons 24 de guidage solidaires du bâti rigide 10.

Le système d'équilibrage est complété par un actionneur d'équilibrage 58, comprenant essentiellement un moteur électrique 59, qui est réversible et entraîne la vis 56 en rotation, l'actionneur 58 étant solidaire du socle 10.

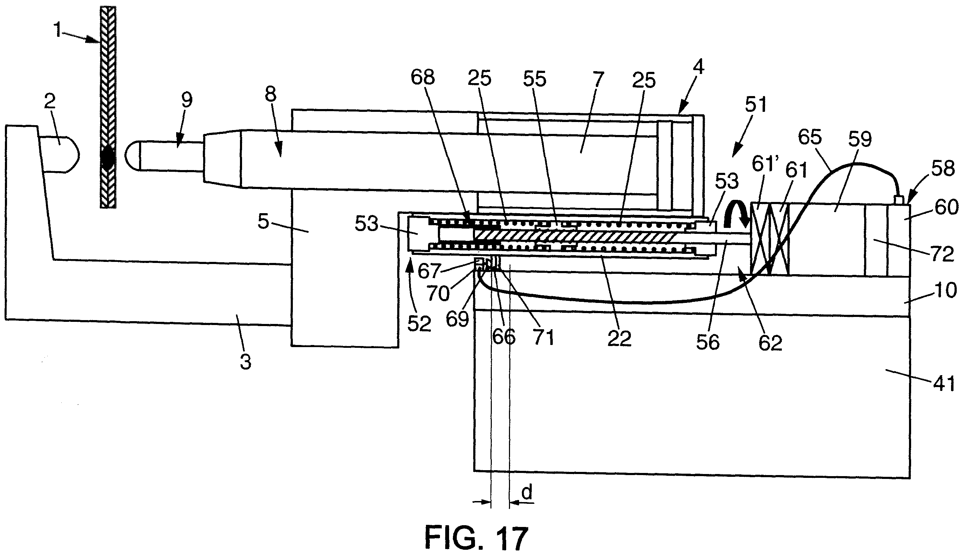

Le module d'équilibrage 51 est ainsi un module électromécanique, associant la cassette 52 de guidage en translation et d'équilibrage élastique à l'actionneur d'équilibrage 58, dont le moteur 59 est commandé par un circuit électronique de commande. Ce circuit de commande peut être agencé en carte électronique 60 directement intégrée à l'arrière du moteur 59, éventuellement équipé d'un frein de sécurité, schématisé en 61, et/ou d'un étage réducteur de sortie 61' (voir figures 17 à 20 décrites ci-dessous) pour l'entraînement de la vis 56 en rotation. De plus, le moteur 59 intègre avantageusement un limiteur de couple ou un capteur de position, commandant le serrage du frein de sécurité afin de bloquer le moteur 59 dans sa position instantanée, et donc aussi le système 54 vis-écrou, dans des circonstances précisées ci-dessous.

En outre, le module d'équilibrage 51 comprend un détecteur de position permettant de détecter le déplacement, dans le système d'équilibrage, de la charge constituée par le sous-ensemble mobile (3, 4, 8) et tous les organes qui lui sont éventuellement solidaires en déplacement par rapport au support, c'est-à-dire dans cet exemple par rapport au bâti 10, ce détecteur de position commandant l'actionneur d'équilibrage 58, et plus précisément la carte électronique 60 de commande du moteur 59, afin que le moteur 59 soit entraîné en rotation dans le sens qui convient et du nombre de tours qui convient pour amener la charge par déplacement longitudinal de l'écrou 55 du système 54 vis-écrou dans sa position équilibrée entre les deux ressorts 25.

Dans cet exemple, le détecteur de position est un capteur 62 de position continue linéaire, comprenant une tige 63 s'étendant sensiblement parallèlement à la vis 56, dans l'espace libre entre le corps 22 de la cassette 52 et le bâti 10, et en saillie sur la face de l'actionneur 58 qui est tournée vers le système 54 vis-écrou, et cette tige 63 coopérant avec un élément 64 fixé en saillie sur une face externe du corps 22 de la cassette 52, et donc solidaire du sous-ensemble mobile (3, 4, 8) dans ses déplacements, pour délivrer un signal de position à la carte électronique de commande 60 du moteur 59 par la ligne 65 reliant la base de ce capteur 62 à cette carte 60.

A titre d'exemple, ce capteur de position 62 peut être de type potentiométrique, auquel cas l'élément 64 solidaire de la cassette 52 est un drapeau coulissant en contact le long de la tige 63 pour délivrer un signal de position à la carte de commande 60 du moteur 59.

Selon un autre exemple, ce capteur de position 62 peut être de type magnétostrictif, auquel cas l'élément 64 solidaire de la cassette 52 est un anneau magnétique engagé autour et coulissant le long de la tige 63, pour délivrer un signal à la carte de commande 60 du moteur 59.

On réalise ainsi un module d'équilibrage 51 dont le système d'équilibrage intègre un actionneur 58 asservi, permettant d'agir sur les ressorts d'équilibrage 25 du dispositif souple de ce système, et de corriger la position du sous-ensemble mobile (3, 4, 8) à équilibrer, grâce au capteur de position 62 également intégré au système d'équilibrage et agissant sur l'actionneur 58 de façon à permettre au système d'équilibrage de fonctionner de façon autonome, quelle que soit la masse de l'outil à équilibrer et son orientation dans l'espace.

Le module d'équilibrage 51 comporte encore une butée d'arrêt 66 fixée en saillie sur une face externe du corps 22 de la cassette 52, par exemple du même côté que l'élément 64 du capteur 62, et une butée 67 de fin de course de détalonnage, solidaire du support en étant, dans cet exemple, solidaire du bâti 10 et en saillie sur ce dernier, de sorte à limiter la course en translation de la cassette 52 avec le sous-ensemble mobile (3, 4, 8), dans le sens qui écarte l'électrode fixe de l'assemblage de tôles 1, par la venue en contact de la butée 66 d'arrêt de la cassette d'équilibrage 52 contre la butée 67 de fin de course de détalonnage.

Ainsi, l'actionneur d'équilibrage 58 remplit également la fonction d'un actionneur de détalonnage, car le moteur 59 peut être mis en rotation de façon à repousser, par le système 64 vis-écrou, la charge à équilibrer avec le sous-ensemble mobile (3, 4, 8) et donc aussi le corps 22 de la cassette 52, jusqu'à amener la butée d'arrêt 66 de la cassette 52 contre la butée 67 de fin de course de détalonnage, fixée sur le bâti 10, et donc fixe par rapport au support de la pince.

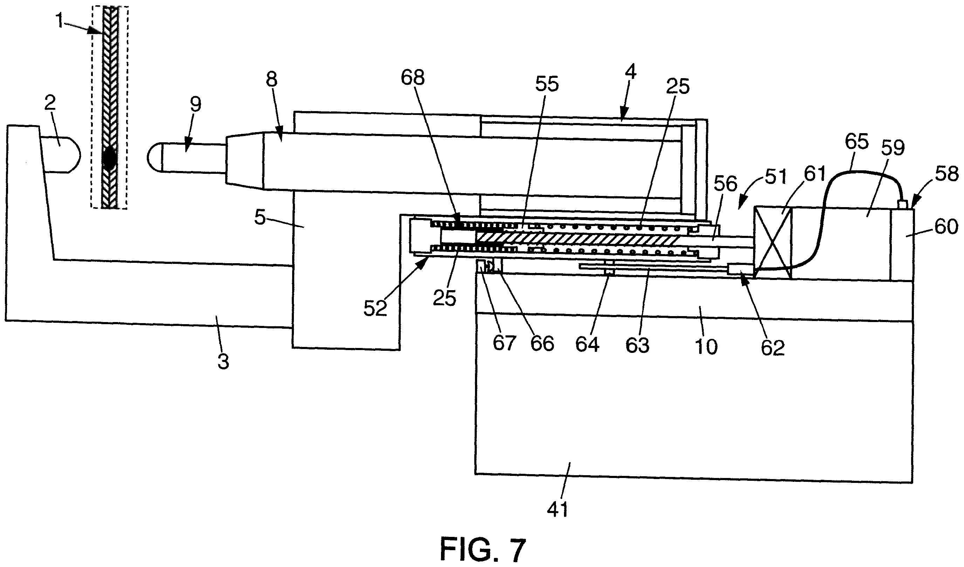

Le fonctionnement de la pince en C équipée de ce module d'équilibrage 51, selon les figures 5 et 6, est décrit ci-dessous en référence aux figures 7 à 16 en partant de la pince en butée dans sa position détalonnée selon la figure 7, dans laquelle les électrodes fixe 2 et mobile 9 sont écartées de l'empilage de tôles 1 à assembler, et en dehors de la zone d'incertitude de position de cet empilage, comme représenté en pointillés de part et d'autre des tôles 1, la cassette 52 de guidage et d'équilibrage étant bloquée dans sa position de référence par contact de la butée d'arrêt 66 de la cassette 52 contre la butée 67 de fin de course de détalonnage sur le socle 10, l'écrou 55 du système 64 vis-écrou ayant été déplacé le long de la vis 56 par la rotation du moteur 59 de l'actionneur 58 dans le sens qui a conduit au contact des deux butées 66 et 67, puis l'entraînement du système vis-écrou 64 après cette mise en contact des butées 66 et 67 ayant été poursuivi jusqu'à la mise en contact de l'écrou 55 contre une butée 68 d'arrêt de l'écrou 55 en translation sur la vis 56, et destinée à limiter la compression du ressort 25 situé du côté de la butée 67 par rapport à l'écrou 55 (ressort 25 comprimé à gauche sur la figure 5) et éventuellement à limiter la traction de l'autre ressort d'équilibrage 25 (entre l'écrou 55 et l'actionneur 58 - à droite sur la figure 5).

Cette butée 68 d'arrêt de l'écrou en translation sur la vis 56 est, dans cet exemple, une butée tubulaire, dans laquelle est engagée sans contact l'extrémité de la vis 56, du côté opposé au moteur 59, et qui est solidaire de l'écrou 53 de précontrainte du ressort d'équilibrage 25 du côté de la même extrémité axiale de la cassette 52. La butée d'arrêt 68 empêche ainsi que l'écrou 55 ne soit déplacé le long de la vis 56 au point de comprimer ce ressort 25 hélicoïdal jusqu'à ce que ses spires soient jointives, ce qui peut être dommageable pour ce ressort.

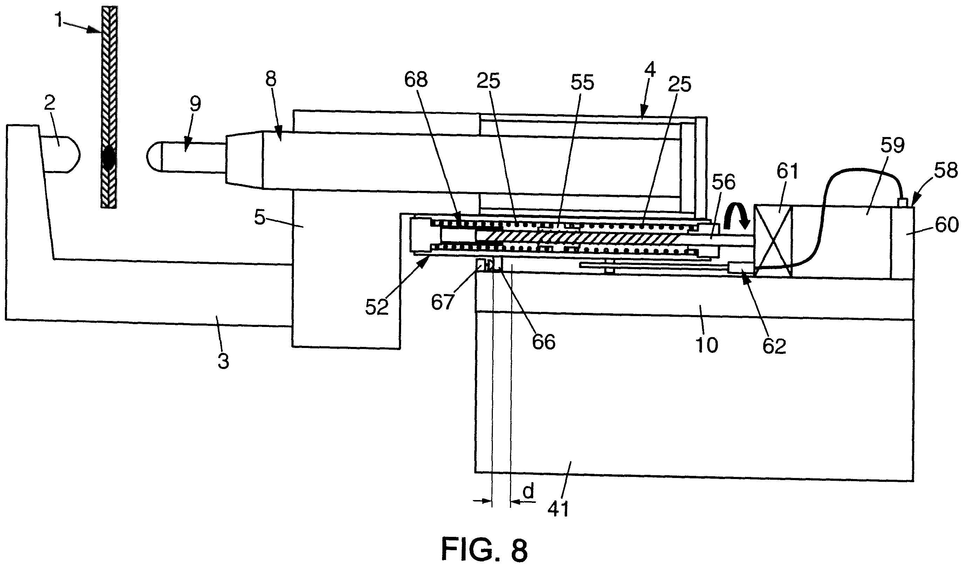

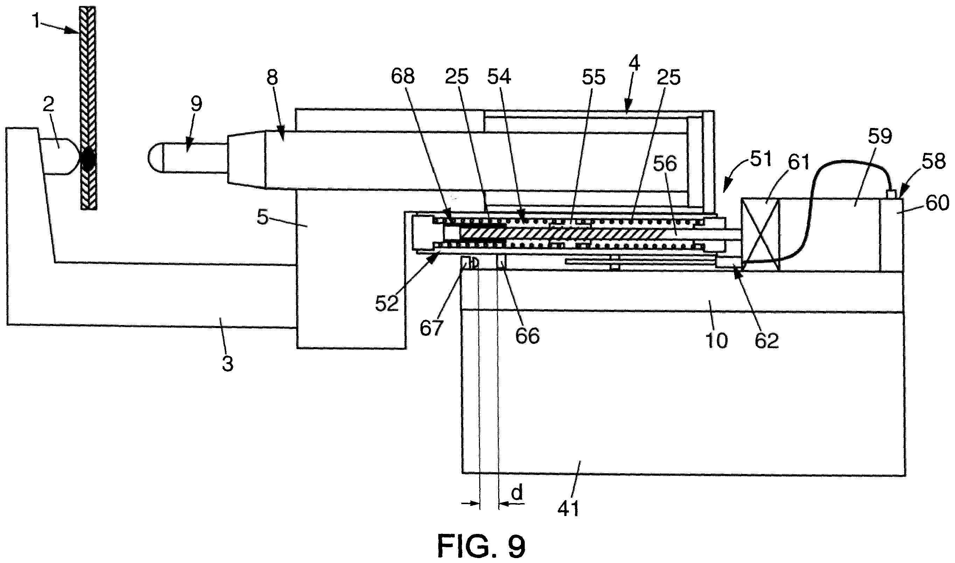

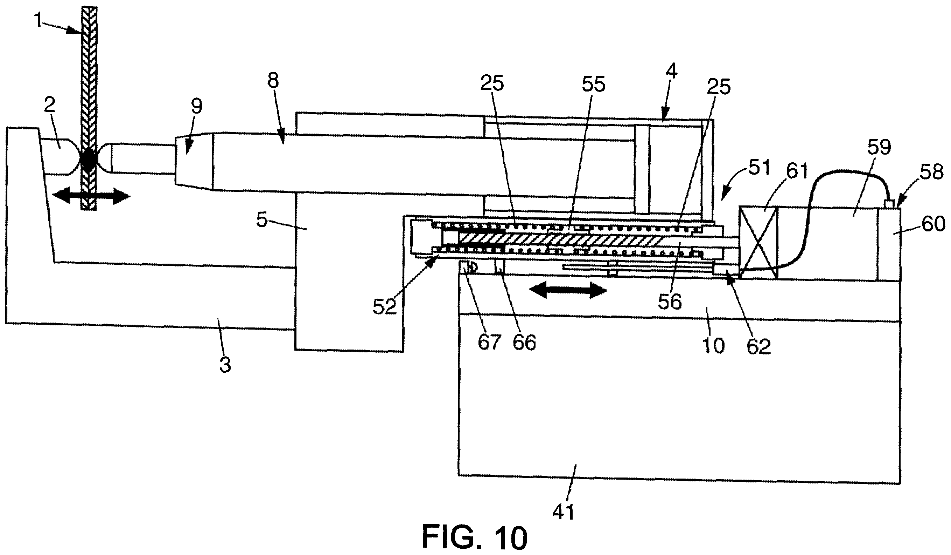

A partir de la position détalonnée de la figure 7, l'utilisateur donne à la carte électronique 60 une instruction pour que la pince atteigne sa position d'équilibrage, et la carte 60 commande la mise en rotation du moteur 59 et du système 64 vis-écrou jusqu'à ce que la position d'équilibrage soit atteinte, c'est-à-dire lorsqu'une distance fixe « d » sépare la butée de détalonnage 67 de la butée d'arrêt 66 de la cassette d'équilibrage 52. La vis 56 est entraînée en rotation par le moteur 59 dans le sens qui écarte l'écrou 55 de la butée d'arrêt 68 et, dans une premier temps, ce déplacement de l'écrou 55 permet la détente du ressort 25 comprimé, situé du côté de la butée 68, et la compression de l'autre ressort 25 détendu, situé du côté de l'actionneur 58, sans que la butée d'arrêt 66 ne quitte le contact de la butée de détalonnage 67. Ce premier temps se termine lorsque, grâce à la rotation du moteur 59, l'écrou 55 du système 64 vis-écrou est revenu à la position d'équilibre de la cassette 52 sous l'action des deux ressorts 25 en opposition, les deux butées 66 et 67 étant toujours en contact l'une avec l'autre, comme représenté sur la figure 8, sur laquelle, de plus, la pince est ouverte, puisque le bras mobile 8 est rentré au maximum dans le corps 5 de l'actionneur principal 4. Cependant, pour gagner du temps, la fermeture de la pince par déplacement du bras mobile 8 vers l'empilage de tôles 1 grâce à l'actionneur principal 4 peut être commandé tandis que le mouvement d'équilibrage s'opère. A partir de la position d'équilibrage de la figure 8, la poursuite de la rotation du moteur 59 dans le même sens a pour effet que la pince va ensuite se déplacer en translation, de sorte que la butée d'arrêt 66 s'écarte de la butée de détalonnage 67. Ce mouvement de translation est interrompu lorsque le capteur de position 62 indique à la carte électronique 60 que la distance séparant les butées 66 et 67 est égale à la distance fixe « d », qui correspond à la position d'accostage de l'électrode fixe 2 contre l'empilage de tôles 1, et l'arrêt du moteur 59 est commandé (voir figure 9). Sur cette figure 10, comme schématiquement indiqué par les doubles flèches, la pince est en équilibre dans la cassette 52 à ressorts 25 et peut donc s'ajuster par rapport à la position réelle des tôles 1 sans effort excessif sur celles-ci.

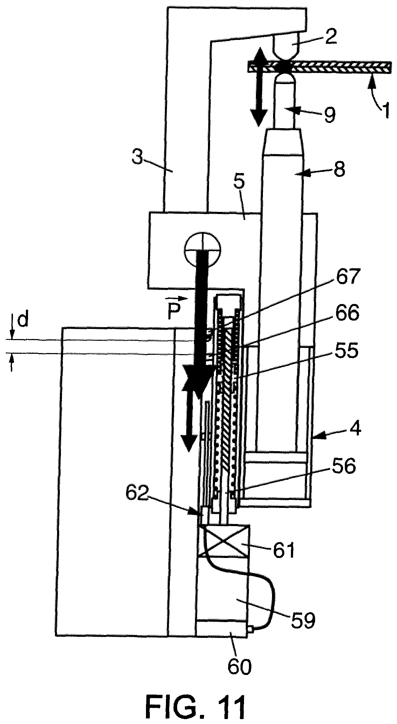

Si la pince est disposée en position verticale avec les bras 3 et 8 dirigés vers le haut, comme représenté sur la figure 11, la pince, c'est-à-dire le sous-ensemble mobile (3, 4, 8) se déplace sous l'effet de son propre poids P avec la cassette 52 par rapport au système 54 vis-écrou, ce qui comprime le ressort 25 en position supérieure, et, du fait de l'écrasement de ce ressort 25, la distance « d » entre les butées 66 et 67 n'est plus respectée. A partir de la nouvelle position d'équilibre atteinte et détectée par le capteur de position 62, le moteur 59 est mis en rotation automatiquement par la carte de commande 60, et le système vis-écrou 54 est entraîné pour remonter la pince, afin que la distance « d » soit respectée. La mise en rotation du moteur 59 permet ainsi de compenser l'écrasement de l'un des ressorts 25 sous l'influence du poids de l'outil, et la pince est de nouveau en équilibre dans la cassette à ressorts 52. La distance « d » étant à nouveau atteinte, l'arrêt de la rotation du moteur est commandé. A partir de cette position, représentée sur la figure 11, l'outil peut s'ajuster par rapport à la position réelle des tôles 1 sans effort excessif sur celles-ci, comme indiqué par les doubles flèches de la figure 11. En pratique, les deux déplacements, à savoir l'écrasement d'un ressort 25 dans la cassette 52 et la mise en rotation du moteur 9, seront simultanés, ce qui permet de ne sensiblement jamais perdre la distance « d ».

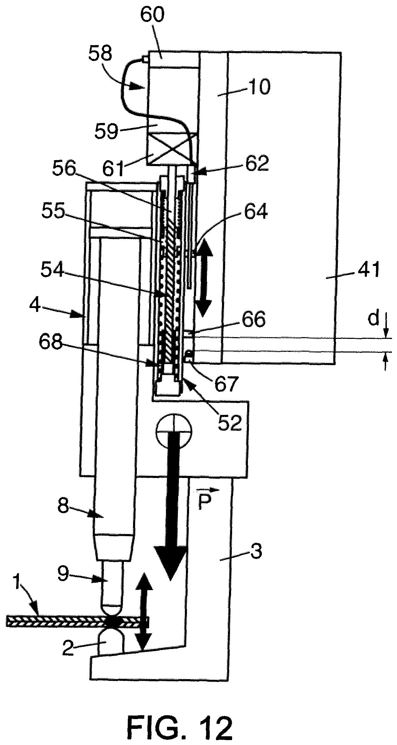

De manière similaire, lorsque, comme représenté sur la figure 12, la pince est orientée en position verticale, avec les bras 3 et 9 tournés vers le bas, la pince se déplace avec la cassette 52 sous l'effet de leur propre poids P par rapport au système 54 vis-écrou, en comprimant l'un des deux ressorts 25, et du fait de l'écrasement de ce ressort 25, la distance « d » n'est plus respectée. Sans action sur le moteur 59, une nouvelle position d'équilibre est atteinte. A partir de cette nouvelle position d'équilibre, la mise en rotation du moteur 59 et du système vis-écrou 54 permet de remonter la pince afin que la distance « d » soit à nouveau respectée. Comme dans le cas de la figure 11, on comprend que, sans compensation par le moteur 59, l'électrode fixe 2 ne serait pas au contact des tôles 1, ainsi, celle-ci serait déformée lors de la fin de la phase de fermeture de la pince par le bras mobile 8. La rotation du moteur 59 permet donc de compenser l'écrasement du ressort 25 sous l'influence du poids de l'outil, à nouveau amené en équilibre dans la cassette 52. La distance « d » étant à nouveau atteinte, l'arrêt de la rotation du moteur 59 est commandé. Comme indiqué par les doubles flèches sur la figure 12, le sous-ensemble mobile (3, 4, 8) à nouveau en équilibre dans la cassette 52 peut s'ajuster par rapport à la position réelle des tôles 1 sans effort excessif sur celles-ci.

Comme dans le cas de la figure 11, en pratique, les deux déplacements, à savoir l'écrasement d'un ressort 25 dans la cassette 52 et la mise en rotation du moteur 59, seront simultanés, ce qui permet de ne pratiquement jamais perdre la distance « d ».

On comprend que le principe, qui consiste à utiliser le capteur de position 62 pour lire le déplacement de la charge à équilibrer dans la cassette 52 et informer le moteur 59 qui, mis en rotation, va venir compenser au moyen du système 54 vis-écrou ce déplacement et repositionner la charge sur une position théorique des tôles 1, fonctionne quelle que soit l'orientation de la pince dans l'espace, jusqu'à une certaine masse du sous-ensemble mobile et des organes qui lui sont solidaires en déplacement, en fonction de la raideur et de la longueur des ressorts 25 choisis.

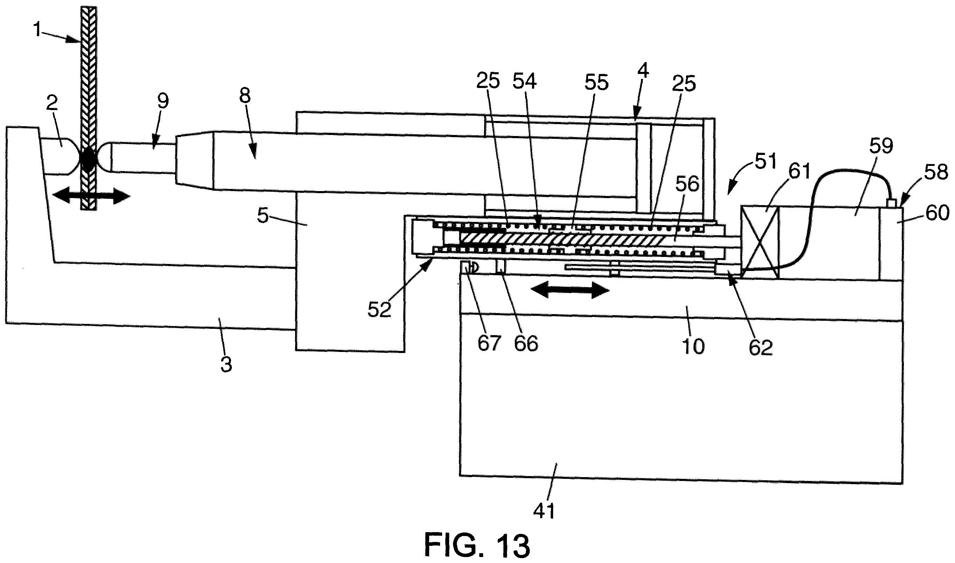

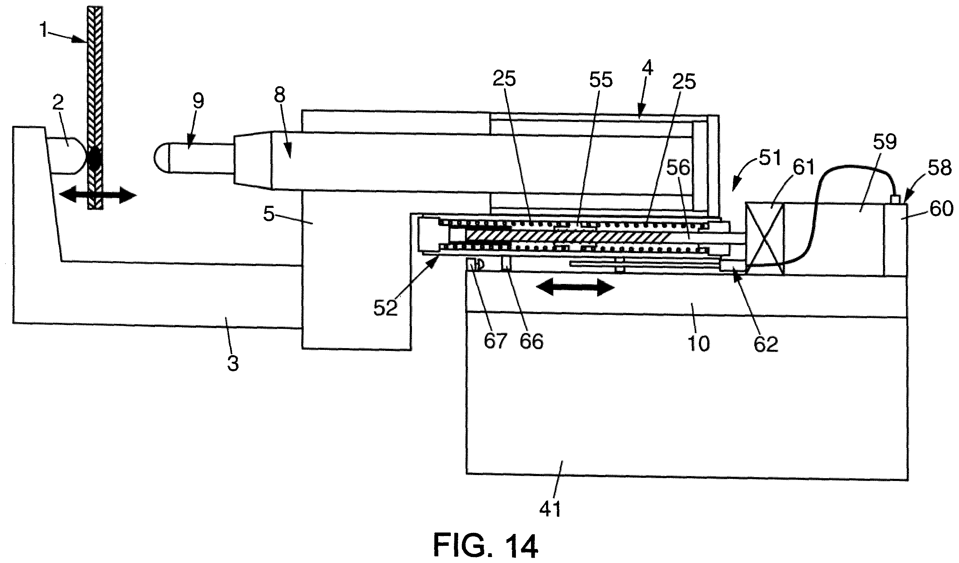

Indépendamment de l'orientation dans l'espace de la pince, et à partir d'une position équilibrée telle que celle de la figure 13, l'opération de détalonnage, c'est-à-dire de retour du sous-ensemble mobile en butée dans une position fixe par rapport au support, peut être réalisée comme décrit en référence aux figures 14 à 16.

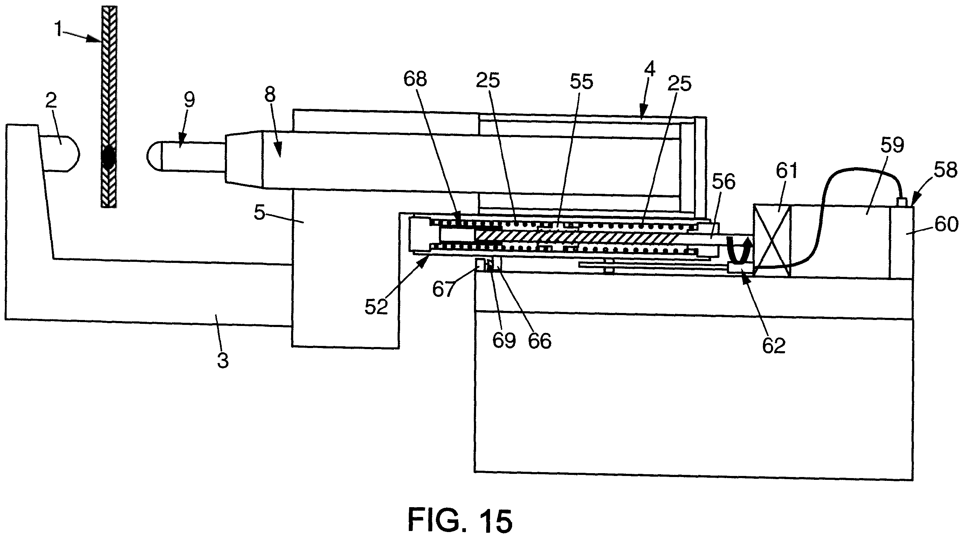

On commande tout d'abord la réouverture du bras mobile 8 grâce à l'actionneur principal 4, comme montré sur la figure 14, puis l'utilisateur donne à la carte électronique 60 l'instruction pour commander la mise en rotation du moteur 59 de sorte à entraîner le système 54 vis-écrou dans le sens qui déplace l'écrou 55 vers sa butée d'arrêt 68, et donc le sens qui déplace le sous-ensemble mobile (3, 4, 8) et la cassette 52 vers la position détalonnée, en rapprochant la butée 66 de la butée de détalonnage 67. Cette mise en rotation du moteur 59 peut intervenir alors que le bras mobile 8 continue de s'ouvrir sous l'action du vérin 4. La figure 15 représente la position dans laquelle la butée 66 d'arrêt de la cassette 52 est entrée en contact avec la butée de détalonnage 67, ce qui correspond à une position détectée par le capteur 62, et, dans cet état, les électrodes 2 et 9 sont dégagées de l'assemblage de tôles 1.

Si la butée de détalonnage 67 est associée à ou équipée d'un moyen de préhension libérale du corps 22 de la cassette 52, et donc du sous-ensemble (3, 4, 8) qui est solidaire de ce corps 22, le moyen de préhension schématisé en 69 pouvant être un électroaimant, une ventouse électromagnétique ou pneumatique seul(e) ou associé(e) à un système mécanique de préhension, l'ensemble constitué du corps 22 de la cassette 52 et du sous-ensemble mobile (3, 4, 8) est bloqué en translation dans cette position par ce moyen de préhension 69, qui retient alors la butée d'arrêt 66 de la cassette 52, et la rotation du moteur 59 peut être interrompue. Ensuite, pour permettre le déplacement de la cassette 52 vers la position d'équilibrage, le moyen de préhension 69 est commandé ou actionné de sorte à libérer la cassette 52 et la butée 66.

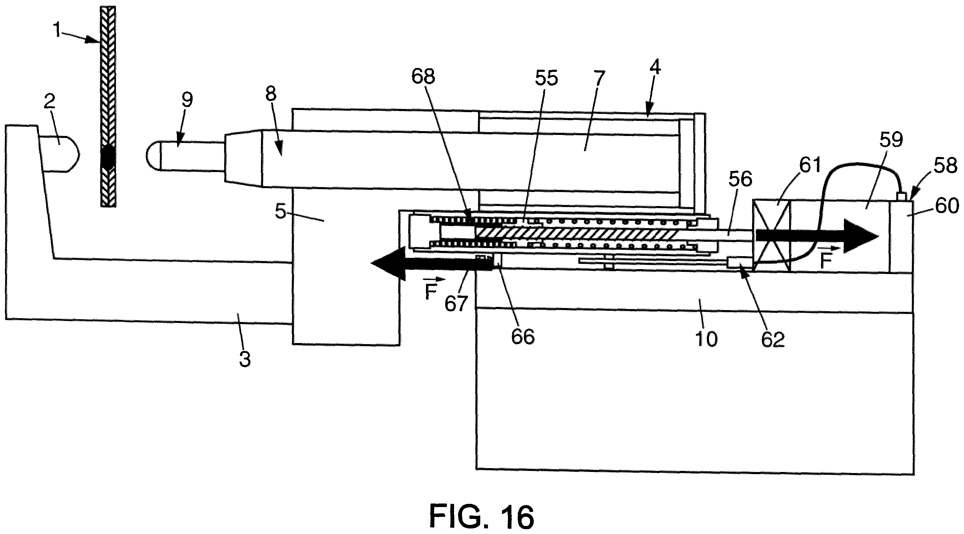

Par contre, sans moyen de préhension libérable, afin de sécuriser la position du sous-ensemble mobile (3, 4, 8), la rotation du moteur 59 et donc du système vis-écrou 54 est poursuivie jusqu'au contact de l'écrou 55 avec la butée 68 d'arrêt de cet écrou en translation sur la vis 56, comme représenté sur la figure 16. La pince est alors bloquée en translation, et l'arrêt de la rotation du moteur 59 est commandé par la position de détalonnage détectée par le capteur de position 62 ainsi que par l'élévation du couple moteur ou par un autre capteur indiquant l'entrée en contact entre l'écrou 55 et la butée 68 d'arrêt. Le moteur 59 intégrant avantageusement, comme déjà dit ci-dessus, un limiteur de couple ou un capteur de position après l'arrivée de la butée d'arrêt 66 en contact avec la butée de détalonnage 67, puis après l'arrivée de l'écrou 55 en butée contre la butée d'arrêt 68 limitant la course de cet écrou 55, le limiteur de couple ou capteur de position permet de couper l'alimentation électrique du moteur 59 et déclenche le serrage du frein de sécurité 61, afin de bloquer le moteur 59 dans sa position, et donc aussi le système vis-écrou 54 sans risque de surchauffe.

En conséquence, le système d'équilibrage est donc également apte à amener, grâce à l'actionneur d'équilibrage 58, le sous-ensemble mobile (3, 4, 8) dans une position de référence fixe, qui est la position détalonnée, par rapport au bâti 10, et donc aussi au support de la pince dont ce bâti est solidaire, dans cet exemple.

On comprend également que, d'une manière générale, le système d'équilibrage est apte à bloquer le sous-ensemble mobile (3, 4, 8) dans une position par rapport au support, ce qui correspond à un blocage du degré de liberté supplémentaire.

La sécurisation de la position de détalonnage nécessite un certain effort de poussée F sur la butée 67, et cet effort axial doit être supporté par le moteur 59. Donc, afin de limiter l'échauffement du moteur, on commande l'action du frein de sécurité 61 du moteur 59, comme indiqué ci-dessus, grâce au limiteur de couple ou au signal issu du capteur indiquant l'entrée en contact entre l'écrou 55 et la butée 68 d'arrêt, pour sécuriser cette position de détalonnage.

Dans la variante du module d'équilibrage 51 selon la figure 17, le capteur de position continu et linéaire 62 des figures 5 et 7 à 16 est remplacé par un ensemble détecteur comportant un capteur de fin de course 70, associée ou intégré à la butée 67 de détalonnage, et détectant la présence ou l'absence d'un contact mobile 71, associé ou intégré à la butée 66 d'arrêt de la cassette 52. Le signal du capteur 70 est transmis par la ligne 65 à la carte de commande 60, recevant également un signal d'un codeur 72 associé au moteur 59 pour détecter le nombre de tours effectués par le moteur 59 à partir de l'instant où la butée 66 d'arrêt et le contact mobile 71 s'écartent de la butée de détalonnage 67 et du capteur de fin de course 70, lors d'un déplacement de la cassette 52 de la position de détalonnage vers la position d'équilibrage, afin de commander l'arrêt de la rotation du moteur 59 lorsque la butée d'arrêt 66 est à la distance « d » prédéterminée de la butée de détalonnage 67. Comme dans l'exemple précédent, si la position détalonnée est sécurisée par l'écrou 55 amené en appui contre la butée 68 de limitation de sa course, dans la première partie du déplacement de la position détalonnée à la position équilibrée, l'écrou 55 du système 54 vis-écrou revient dans la position d'équilibrage de la cassette 52 sous l'action des deux ressorts 25 antagonistes. Puis, à partir de cette position, le sous-ensemble mobile (3, 4, 8) se déplace en translation, la butée 66 s'écartant de la butée 67, et, sans modification de l'orientation de la pince, le déplacement du sous-ensemble mobile (3, 4, 8) correspond au déplacement de l'écrou 55. A partir de cette position, le capteur de fin de course 70 détecte la mise en mouvement de la charge avec la cassette 52, la butée 66 et le contact mobile 71, et la carte de commande 60 reçoit cette information du capteur 70, et le moteur 59 sous le contrôle du codeur 72 vise la position d'équilibrage, qui correspond à un déplacement de l'écrou 55 de cette distance « d » tandis que le mouvement d'équilibrage s'opère. La fermeture du bras mobile 8 peut éventuellement être commandée par l'actionneur de soudage 4, de sorte que la pince est fermée au plus tôt au moment où la distance d'équilibrage « d » est atteinte, et la rotation du moteur 59 arrêtée.

Après un point de soudage, la pince peut revenir en butée en position de détalonnage, par la rotation dans le sens opposé du moteur 59 et de la vis 56, et le déplacement de l'écrou 55 vers sa butée 68, indépendamment de l'orientation de la pince, de préférence après avoir commandé un début d'ouverture de la pince (rentrée du bras mobile 8 dans le corps 5 de l'actionneur 4) . Le capteur de fin de course 70 détecte le retour du sous ensemble mobile (3, 4, 8) en position détalonnée quand la butée d'arrêt 66 de la cassette 52 avec le contact mobile 71 entre en contact avec la butée 67 de détalonnage, avec blocage dans cette position par le moyen de préhension 69, s'il existe, permettant une fixation libérable de la cassette 52 contre la butée 67, ou, en l'absence de moyen de préhension 69, sécurisation de la position de détalonnage par la poursuite de la rotation du moteur 59 jusqu'à amener l'écrou 55 contre sa butée 68 de limitation de mouvement, suite à quoi le moteur 59 est arrêté, et le frein 61 éventuellement serré. Cette réalisation, dans laquelle le capteur continu linéaire est remplacé par un capteur de fin de course 70 à contact mobile 71 venant indiquer que la charge est en contact avec la butée de détalonnage 67 ou a quitté cette dernière, et se trouve donc en équilibre dans la cassette, a pour avantage de réduire le risque d'oscillation de la charge dans la cassette 52. Le codeur 72 associé au moteur 59 permet alors de positionner l'écrou 55 suivant la distance à respecter « d ». Bien que cette réalisation ne soit valable que dans les cas où l'orientation de la pince n'est pas modifiée lors de la phase d'équilibrage, elle présente un grand intérêt car, en pratique, tel est bien le cas dans la grande majorité des applications de soudage par résistance.

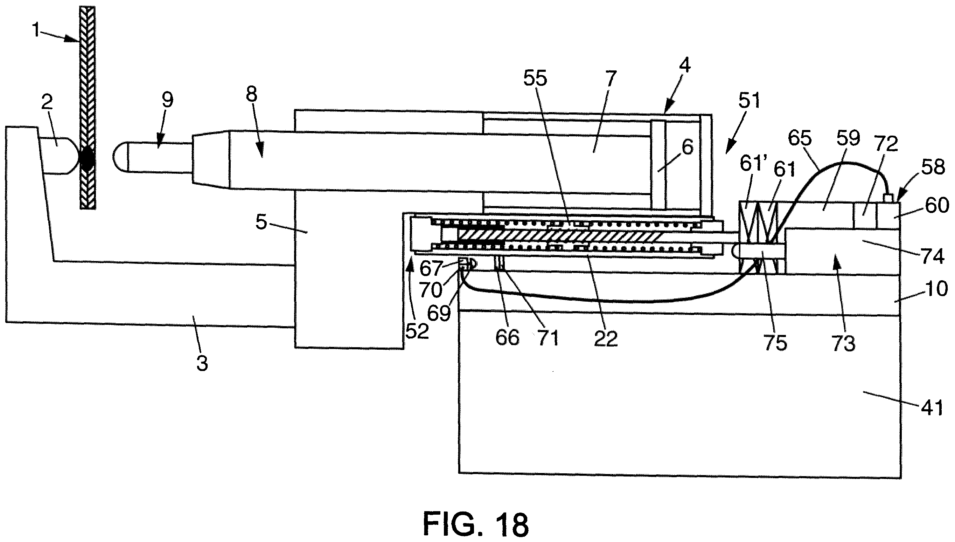

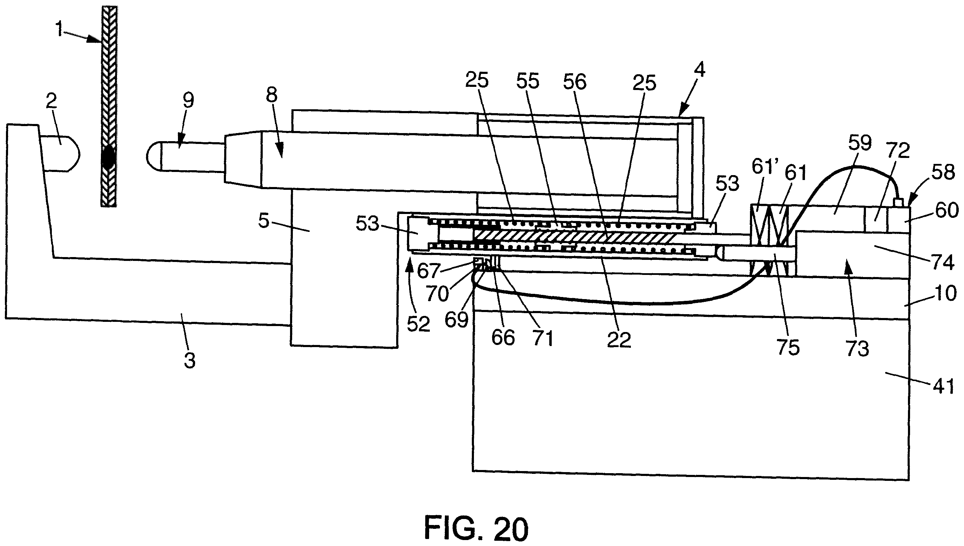

Les figures 18 à 20 représentent une variante de la réalisation de la figure 17, dans laquelle la pince est équipée d'un module d'équilibrage 51 comprenant de plus, un actionneur de détalonnage 73, réalisé sous la forme d'un actionneur linéaire auxiliaire, dont la direction d'action est parallèle à la vis 56 du système 54 vis-écrou, est qui permet de déplacer la cassette 52 avec le sous-ensemble mobile (3, 4, 8) de la position d'équilibrage à la position de détalonnage, c'est-à-dire d'amener la butée d'arrêt 66 de la cassette 52 contre la butée de étalonnage 67, sans avoir à entraîner le moteur 59. Dans une réalisation simple, cet actionneur de détalonnage 73 est un actionneur à simple effet, d'un type bien connu tel qu'un vérin mécanique ou à fluide de manoeuvre, avec rappel élastique, par exemple grâce à au moins un ressort, en position initiale de repos, dans laquelle la tige 75 de cet actionneur 73 est élastiquement rappelée axialement dans un corps d'actionneur tubulaire 74, par exemple fixé latéralement contre le corps de l'actionneur d'équilibrage 58. Cet actionneur 73 fonctionne comme un poussoir, car la commande de la sortie de sa tige 75 hors de son corps 74 permet, comme représenté sur la figure 20, de repousser le corps 22 de la cassette 52 et de replacer le sous-ensemble mobile (3, 4, 8) en appui par la butée d'arrêt 66 de la cassette 52 contre la butée de détalonnage 67, sans solliciter l'actionneur d'équilibrage 58. Eventuellement, le fonctionnement de l'actionneur de détalonnage 73 peut être synchronisé avec celui du moyen de préhension ou de fixation libérable 69, de sorte que l'actionneur de détalonnage 73, du type à simple effet, peut être ramené élastiquement en position initiale dès que le moyen de préhension 69 a été actionné pour maintenir la butée d'arrêt 66 contre la butée de détalonnage 67.

En variante, il est également possible de supprimer le moyen de préhension 69 en le remplaçant par le maintien de la commande de sortie de la tige 75 de l'actionneur de détalonnage 73. Permettant ainsi d'assurer la permanence du contact entre la butée de détalonnage 67 et le butée d'arrêt 66 de la cassette.

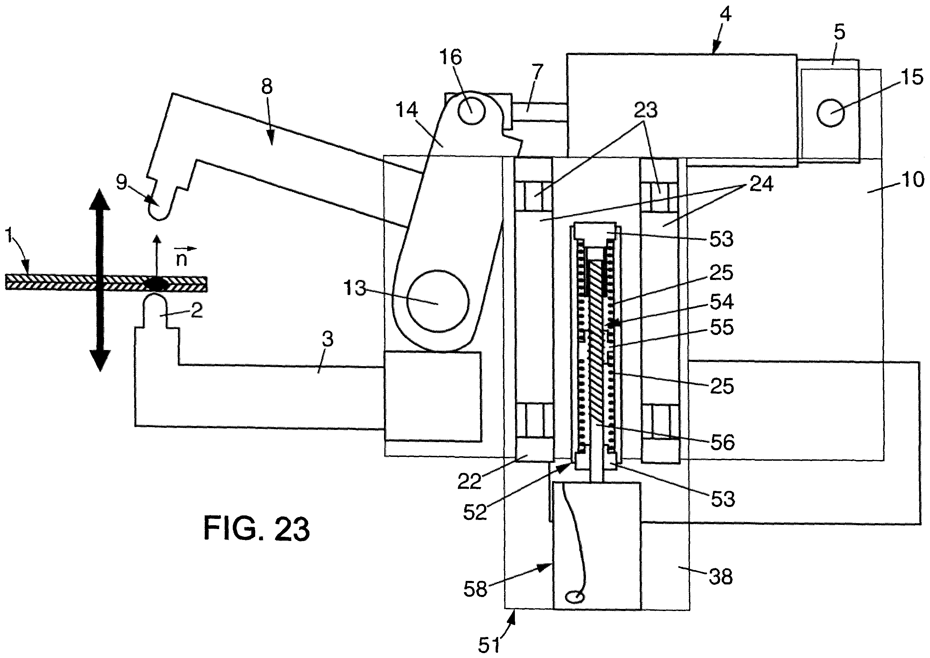

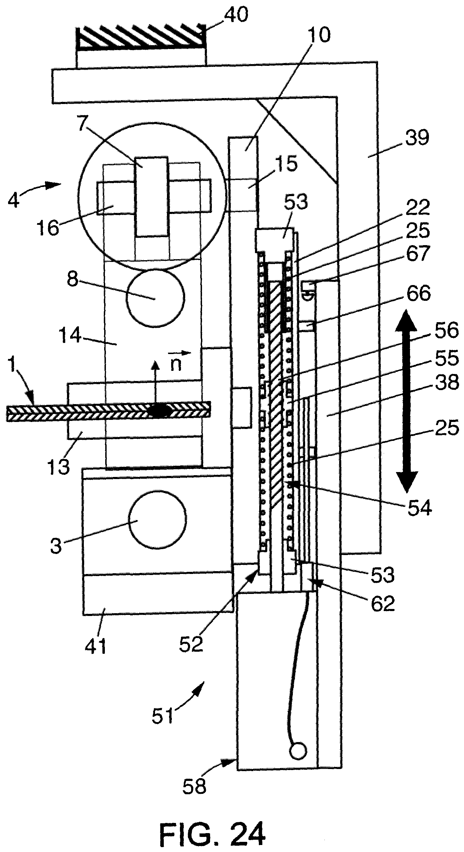

Dans cet exemple, l'actionneur de détalonnage 73 et le moyen de préhension 69 constituent des moyens auxiliaires grâce auxquels le sous-ensemble mobile (3, 4, 8) peut être maintenu en butée en position de détalonnage sans que l'écrou 55 du système 54 vis-écrou n'ait besoin de se trouver en bout de course. Avantageusement, grâce à l'utilisation d'un inclinomètre tel que décrit dans les brevets EP 1 078 707 et FR 2 797 794 du Demandeur, il est possible de renseigner le module d'équilibrage 51 sur l'évolution de l'inclinaison de la pince dans l'espace. L'actionneur d'équilibrage 58 n'ayant plus pour fonction d'assurer le maintien du sous-ensemble mobile (3, 4, 8) en position initiale de référence, ou position détalonnée, cet actionneur 58 peut anticiper le bon positionnement de l'écrou 55 du système 54 vis-écrou par rapport à la position d'équilibrage, de manière synchrone avec les déplacements du robot. L'écrou 55 étant déjà bien pré-positionné, lors de la commande de la fonction d'équilibrage, le sous-ensemble mobile (3, 4, 8) peut être tiré par l'un des ressorts 25, et non plus poussé par l'écrou 55, sur sa position d'équilibrage, ce qui permet de diminuer de manière très significative le temps de réponse du module d'équilibrage 51. Dans les réalisations des figures 17 à 20, comme la charge est en équilibre dans la cassette 52, l'équilibrage de la charge est de fait assuré dès que la cassette 52 s'écarte par sa butée d'arrêt 66 de la butée 67 de détalonnage. Autour de cette position, la souplesse du système d'équilibrage est conservée, si bien que, lors de la fermeture de la pince sur les tôles 1, la pince a facilement la faculté de s'auto-centrer avec un effort réduit sur l'assemblage de tôles 1. Parmi les nombreux avantages qu'un tel système d'équilibrage procure, notamment la capacité opérationnelle du système quelle que soit l'orientation de l'outil dans l'espace, et l'absence de besoin d'un fluide sous pression, en particulier d'air comprimé, pour son fonctionnement, celui qui consiste en ce que la cassette 52 réalisée avec des dimensions limitées permet cependant de conserver une bonne souplesse d'équilibrage même avec des masses d'outils importantes, est un avantage particulièrement important, dont la conséquence est de permettre d'équilibrer la pince avec un nombre plus important de composants solidaires en mouvement du sous-ensemble mobile (3, 4, 8). En particulier, pour des pinces de soudage, la conséquence est qu'un transformateur de soudage 41 est intégré dans le sous-ensemble mobile, de sorte que le module d'équilibrage 51 peut être déporté à l'extérieur de l'ensemble constitué par le sous-ensemble mobile (3, 4, 8) et le bâti 10, auquel le transformateur de soudage 41 est solidarisé, dans les réalisations selon les figures 5 à 20. Deux exemples de pinces avec module d'équilibrage déporté sont à présent décrits en référence aux figures 21 à 24, les figures 21 et 22 concernant une pince en C et les figures 23 et 24 une pince en X.

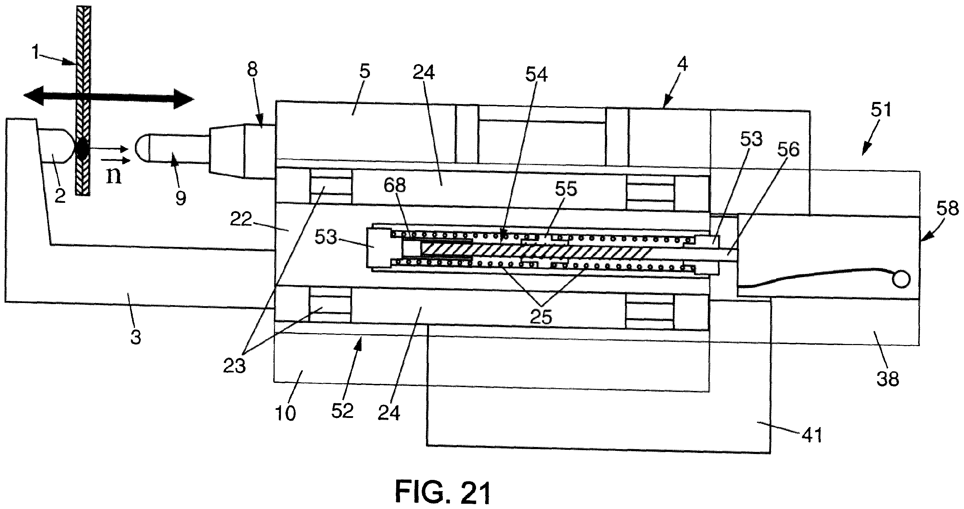

Sur les figures 21 à 24, les mêmes références numériques sont utilisées pour désigner les mêmes composants identiques ou analogues des pinces de l'invention comme des pinces de l'état de la technique, et du module d'équilibrage de l'invention tel que décrit ci-dessus.

Selon les figures 21 à 24, le module d'équilibrage 51 est monté en interface entre le support (39, 40), d'une part, et, d'autre part, le bâti 10, solidaire du corps 5 de l'actionneur 4 de soudage, et donc du sous-ensemble mobile (3, 4, 8) de la pince. Dans ces exemples des figures 21 à 24, le module d'équilibrage 51 est transféré, sous la forme d'un module 51 indépendant, sur l'un des côtés de la pince proprement dite, en interface entre le bâti 10 et le support (39-40).

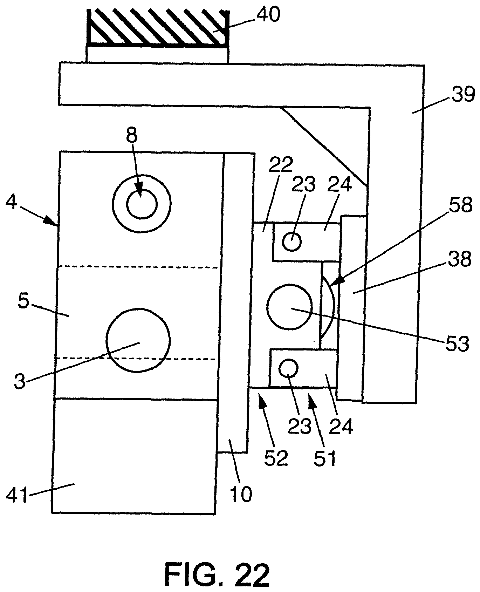

La pince en C, avec module d'équilibrage 51 des figures 21 et 22 a la structure de pince proprement dite et la même structure de module d'équilibrage 51 que les pinces décrites ci-dessus en référence aux figures 5 à 20, avec pour seules différences que le bâti 10 est réalisé sous la forme d'une plaque verticale directement solidaire d'un côté du corps 5 de l'actionneur de soudage 4 qui supporte le bras fixe 3 et qui déplace linéairement le bras mobile 8 le corps 22 de la cassette d'équilibrage 52 étant directement solidaire de la face de la plaque de bâti 10 du côté opposé à la face de liaison de cette plaque de bâti 10 au sous-ensemble mobile (2, 3, 4, 8, 9), et l'actionneur d'équilibrage 58, étant directement solidaire d'une plaque verticale 38, elle-même solidaire de la partie verticale d'une cornière 39 rigide, constituant un élément du support 40 de la pince, ce support 40 pouvant être, comme déjà dit, soit un pied fixe soit encore un bras manipulateur. Une autre différence est que les deux manchons 24, dans lesquels sont guidées en translation longitudinale, parallèlement à la direction de déplacement du bras mobile 8, les deux colonnes de guidage 23 de la cassette d'équilibrage 52, sont rigidement liés à la plaque 38 du support. Ainsi, le système 54 vis-écrou entraîné par l'actionneur 58 à moteur 59 déplace le corps 22 et les colonnes de guidage 23 de la cassette d'équilibrage 52 par coulissement dans les manchons 24 solidaires du support 38-40, parallèlement à la direction de déplacement du bras 8 et de l'électrode 9 mobiles.

Ainsi, la cassette 52, et plus généralement le module 51 d'équilibrage est monté sur l'un des côtés de l'ensemble constitué par le sous-ensemble mobiles (2, 3, 4, 8, 9) et le bâti 10 de la pince, avec son guidage parallèle au vecteur *̅n̅*̅ normal au plan d'assemblage des tôles 1. I1 est clair que le fonctionnement de la pince proprement dite et de son module 51 est identique au fonctionnement décrit ci-dessus en référence aux figures 5 à 20.

Ainsi, la pince de soudage proprement dite n'intègre pas les fonctions d'équilibrage, d'accostage et de détalonnage, et le module 51 indépendant d'équilibrage est monté en interface entre la pince proprement dite, d'une part, et le support, du type pied fixe ou bras manipulateur, d'autre part.

En outre, et comme connu de l'état de la technique, un transformateur de soudage 41 est avantageusement intégré à la pince proprement dite, en étant rendu solidaire du corps 5 de l'actionneur de soudage 4 et/ou de la plaque de bâti 10.

L'exemple des figures 23 et 24 est celui d'une pince en X, dont la structure de la pince proprement dite est telle que celle de la pince en X de la figure 4, et qui est équipée d'un module 51 indépendant d'équilibrage, identique à celui de la pince en C des figures 21 et 22, mais orienté à 90° par rapport à l'orientation du module 51 de l'exemple des figures 21 et 22 en faisant référence à la direction générale du mouvement de l'actionneur 4 de soudage.

En effet, on retrouve sur la pince en X des figures 23 et 24, l'électrode 9 à l'extrémité du bras mobile 8 solidaire du levier 14 pivotant autour de l'axe de basculement 13 sur le bâti 10, rigidement lié au bras fixe 3 avec l'électrode fixe 2, et sur lequel est monté pivotant, autour de l'axe 15, le corps 5 de l'actionneur 4 de soudage, dont la tige 7 a son extrémité également pivotante autour de l'axe 16 sur le levier 14, pour que l'actionneur 4 commande les basculements du bras mobile 8 et du levier 14 autour de l'axe 13, afin d'ouvrir ou de fermer la pince sur l'assemblage de tôles 1 à souder.

Par contre, contrairement à l'état de la technique selon la figure 4, la partie du bâti 10, dont sont rigidement solidaires le bras fixe 3 et le corps 5 de l'actionneur 4 de soudage, ne peut pas être pivotée autour de l'axe de basculement 13, par rapport au reste du bâti 10 par une cassette de guidage et d'équilibrage élastique associée à un actionneur à simple effet de détalonnage, mais le bâti 10 se présente sous la forme d'une plaque de bâti verticale et latérale, sur une face de laquelle sont montés les composants du sous-ensemble mobile, à savoir le bras fixe 3 et l'électrode fixe 2, le bras mobile 8 avec l'électrode mobile 9 et le levier 14, et l'actionneur 4 de soudage ainsi que les axes 13 et 15. De même que sur les figures 21 et 22, un transformateur de soudage 41 peut également être fixé sur cette face de la plaque de bâti 10, dont l'autre face est rigidement liée au corps 22 de la cassette d'équilibrage 52, qui est positionnée de sorte que, dans cet exemple, ses deux colonnes de guidage 23 parallèles et espacées sont verticales et coulissent longitudinalement dans les deux manchons 24 solidaires d'une face de la plaque de support 38 verticale, elle-même solidaire par son autre face d'une cornière de support 39 rigidement liée par son aile supérieure au support 40 (pied fixe ou bras manipulateur), pour assurer la liaison entre ce support 40 et la pince, l'actionneur d'équilibrage 58 étant fixé rigidement également à la plaque de support 38, et de sorte à entraîner le système 54 vis-écrou afin d'obtenir, dans cet exemple également, un guidage parallèle au vecteur *̅n̅*̅ normal au plan d'assemblage des tôles 1.

Dans ce cas également, le module 51 d'équilibrage, est monté par la cassette 22 sur l'un des côtés du bâti 10 de la pince, en interface entre ce bâti 10 et la plaque de support 38, la cornière 39 et le support proprement dit 40, la cornière 39 et/ou la plaque de support 38, pouvant, éventuellement, être omisse selon les configurations du support 40.

En variante, comme d'ailleurs dans l'exemple des figures 21 et 22 le module 51 peut être monté en interface entre la plaque 38 et l'aile verticale de la cornière 39, le corps 22 de la cassette d'équilibrage 52 étant fixé par exemple à la plaque 38 et les deux manchons 24 ainsi que l'actionneur 58 à la cornière 39, ou encore le module 51 peut être monté en interface entre l'aile horizontale de la cornière 39 et le support 40, le corps 22 de la cassette d'équilibrage 52 étant alors fixé par exemple à la cornière 39 et les deux manchons 24 ainsi que l'actionneur 58 au support 40.

Dans les deux exemples des figures 21 à 24, la butée de détalonnage 67 est solidaire du corps 22 de la cassette 52

Donc, dans l'exemple de la pince en C des figures 21 et 22, comme dans l'exemple de la pince en X des figures 23 et 24, le même module d'équilibrage 51 peut autoriser des déplacements en translation du sous-ensemble mobile (2, 3, 4, 8, 9) et de son bâti 10 par rapport au support 40, l'actionneur d'équilibrage 58 associé à la cassette d'équilibrage 52 de ce module 51 assurant lui-même le détalonnage ou cette fonction étant assurée par un actionneur auxiliaire comme décrit ci-dessus, en permettant de ramener le sous-ensemble mobile (2, 3, 4, 8, 9) en position de référence, en butée par rapport au support 40. Dans les deux exemples, les déplacements en translation autorisés par le module 51 sont sensiblement perpendiculaires au plan d'assemblage des tôles 1 à souder, en étant également sensiblement parallèles au déplacement du bras mobile 8 dans l'exemple de la pince en C des figures 21 et 22, et sensiblement parallèles à la direction des deux électrodes 2 et 9 bout à bout en position de fermeture de la pince en X des figures 23 et 24.

Ainsi, grâce à une simple modification de l'orientation du module d'équilibrage 51, le système opérationnel sur une articulation à mouvement linéaire (pince en C) ou rotatif (pince en X). Le même module d'équilibrage 51 peut donc être monté sur tout type de cinématique de la pince.

Dans ces exemples, le module indépendant d'équilibrage 51 offre un degré de liberté en translation, dont les avantages peuvent également être obtenus avec un module d'équilibrage indépendant et déporté, transposé de ceux décrits et représentés pour procurer un mouvement d'équilibrage par basculement partiel de l'ensemble de la pince proprement dite (sous-ensemble mobile et bâti) autour d'un axe.

Dans les pinces selon l'invention, l'opération d'équilibrage peut donc être indifféremment obtenue par un mouvement linéaire ou par un mouvement de rotation.

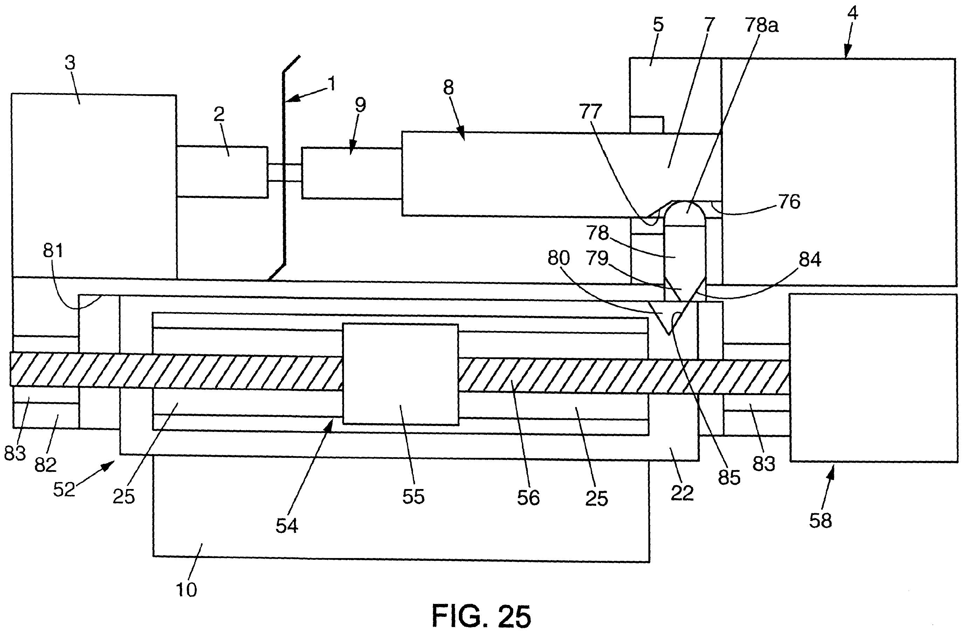

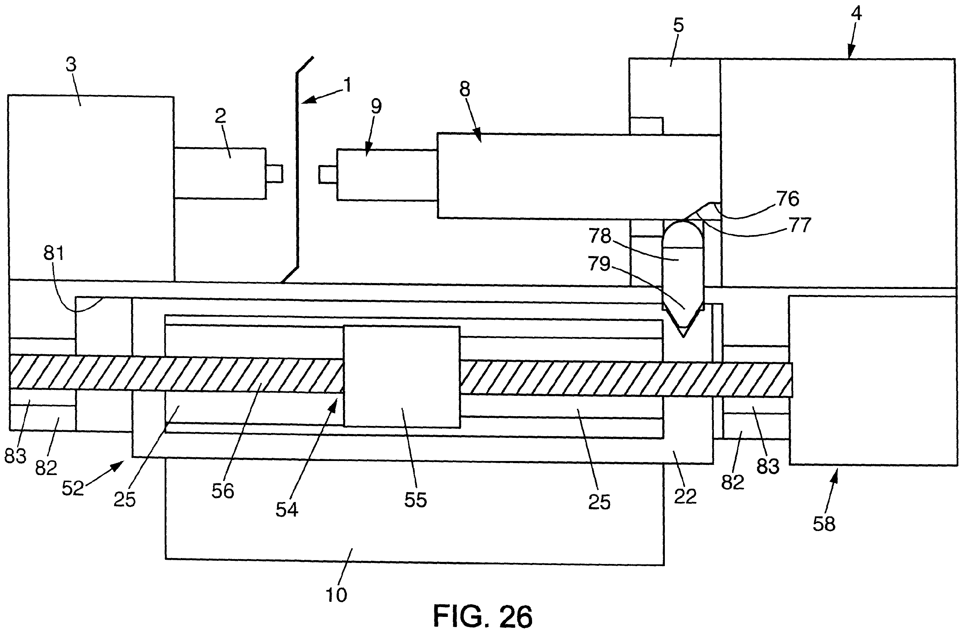

Enfin, l'exemple de pince des figures 25 et 26 est une variante de pince en C, dans laquelle l'actionneur de soudage 24 remplit simultanément la fonction d'actionneur de détalonnage, de sorte que le mouvement de la tige 7 de l'actionneur de soudage 4 est utilisé pour assurer la fonction de retour de la position d'équilibrage (figure 25) à position de détalonnage (26) et le maintient dans cette dernière position.

A cet effet, la tige 7 de l'actionneur de soudage 4 comporte une rainure longitudinale 76, qui se termine, à son extrémité tournée vers le bras mobile, par une rampe inclinée 77 formant une came pour la tête arrondie 79 à l'extrémité supérieure (sur les figures 25 et 26) d'un pion 78 monté coulissant dans un alésage radial traversant le corps 5 de l'actionneur 4. L'autre extrémité du pion 18 est agencée en embout V 79, sensiblement en regard, avec un petit décalage longitudinal, d'un évidement en V 80 de forme ménagée dans la face externe en regard du corps 22 de la cassette d'équilibrage 52, ce corps 22 étant, dans cet exemple, solidaire du bâtit 10, et, par l'intermédiaire de ce dernier, du support (non représenté). Le corps 22 de la cassette 52 est engagé avec du jeu axial ou longitudinal (parallèlement à la direction de la translation du bras mobile 8 par rapport au bras fixe 3) dans un évidement longitudinal 81 ménagé dans le bras fixe 3 et/ou le corps 5 de l'actionneur 4 et/ou un support 82 de bras fixe 3 et d'actionneur 4, qui appartient ainsi au sous-ensemble mobile (3, 4, 8, 82).

Dans l'exemple des figures 25 et 26, le système vis-écrou 54 a toujours l'écrou 55 sollicité en opposition par deux ressorts antagonistes schématisés en 25, à l'intérieur du corps 22 de cassette 52, et la vis 56 sur laquelle est vissée l'écrou 55 est toujours entraînée en rotation par le moteur électrique réversible de l'actionneur d'équilibrage 58, mais ce dernier est solidaire du support 82 de bras fixe 3 et d'actionneur 4 du sous-ensemble mobile, et la vis 56 traverse axialement les deux extrémités longitudinales de la cassette 52 et est montée par ses extrémités dans des paliers 83 de ce support 82.

Ainsi, quand la bras mobile 8 et son électrode 9 sont écartés de l'assemblage de tôle 1, à l'ouverture de la pince, par la rentrée de la tige 7 dans le corps 5 de l'actionneur 4, la rampe 77 formant came pousse la tête 79 du pion 78, qui est repoussé radialement vers l'extérieur du corps 5 de l'actionneur 4, de sorte que son embout en V 79 pénètre dans l'évidement en V 80 du corps 22 de cassette 52. Une face inclinée ou rampe 84 de l'embout en V 79 glisse alors sur une face inclinée 85 ou rampe de l'évidement en V 80 qui est légèrement axialement décalé de l'embout 79, de sorte que la coopération des deux faces inclinée ou rampe 84 et 85 entraîne un déplacement longitudinal du sous-ensemble mobile (3, 4, 8, 82) par rapport à la cassette d'équilibrage 52 fixée au support par l'intermédiaire du bâti 10, dans un sens opposé au sens de déplacement du bras mobile 8 vers l'intérieur de l'actionneur 4, ce qui a pour effet d'écarter l'électrode fixe 2 ( avec le bras fixe 3 et le support 82) de l'assemblage de tôle 1, et d'ouvrir complètement la pince en la ramenant et en la maintenant en position détalonnée de la figure 26, sans avoir besoin de solliciter l'actionneur d'équilibrage 58.

Le passage de la position détalonnée (figure 26) à la position équilibrée (figure 25) s'obtient en commandant la sortie de la tige 7 et donc du bras mobile 8 avec l'électrode mobile 9 hors du corps 5 de l'actionneur 4, de sorte que sous l'effet d'un déséquilibre de la charge de l'écrou 55 par les ressorts antagonistes 25 et/ou par l'entraînement en rotation de la vis 56 par l'actionneur d'équilibrage 58, un déplacement longitudinal 58 est commandé entre le sous-ensemble mobil (3, 4, 8, 82), d'une part, et, d'autre part, la cassette d'équilibrage 52 fixée au bâtit 10, ce qui a pour effet, par la coopération des faces ou rampes inclinées 85 et 84 du corps 22 de la cassette 52 et de l'embout en V 79 du pion 78, de repousser radialement le pion 78, vers l'intérieur du corps 5 d'actionneur 4, de sorte que sa tête 79 se loge à nouveau dans la rainure 76, ce qui permet, par équilibrage des deux ressorts 25 sur l'écrou 55, et par la rotation du système vis-écrou 54 , de commander la fermeture de la pince en déplaçant l'électrode fixe 2 et le bras fixe 3 jusqu'à cette position de fermeture, dans laquelle la pince est alors équilibrée avec une certaine souplesse axiale grâce aux ressorts 25, comme dans les exemples précédemment décrits.

Cette réalisation permet également de limiter la course réalisée par l'écrou 55 du système vis-écrou 54, et donc de réduire en conséquences le temps de réponse ainsi que l'usure de ce système. Simultanément, on limite l'amplitude de la fréquence des mouvements alternatifs de compression et décompression des ressorts 25 de la cassette 52, et donc on limite la sollicitation à la fatigue du système d'équilibrage.

On comprend que la réalisation des figures 25 et 26 peut être également équipée de détecteurs de position de l'un ou l'autre des différents types précédemment décrits, sans qu'il soit nécessaire de les décrire à nouveau.

## Revendications

1. Pince à enserrer des tôles et apte à être utilisée en association avec un bras manipulateur, dit robot, et comprenant :
- un bâti (10) rigide, apte à être lié à un support (40), tel qu'un pied rigide ou ledit robot,
- un sous-ensemble mobile, lié audit bâti (10), et comportant :
- un premier bras (3), dit fixe,
- un second bras (8), dit mobile, et
- un actionneur principal (4) apte à déplacer le bras mobile (8) par rapport au bras fixe (3), suivant un premier degré de liberté, en translation ou rotation, afin de fermer ou d'ouvrir la pince pour, respectivement, enserrer un assemblage de tôles (1) entre les bras fixe (3) et mobile (8) ou libérer l'assemblage de tôles (1), et
- un module d'équilibrage (51), introduisant un degré de liberté supplémentaire entre ledit support (40), d'une part, et, d'autre part, un ensemble intégrant ledit sous-ensemble mobile (3, 4, 8), afin d'équilibrer les efforts exercés sur les extrémités (2, 9) respectivement des bras fixe (3) et mobile (8) en position de fermeture, ledit module d'équilibrage (51) comportant :
- un dispositif (22, 23, 24) permettant un déplacement suivant ledit degré de liberté supplémentaire, en translation dudit sous-ensemble mobile (3, 4, 8) par rapport au support (40),
- un système d'équilibrage (52, 58) comprenant un dispositif souple (22, 25, 53), lié audit sous-ensemble mobile (3, 4, 8) et sollicitant, suivant ledit degré de liberté supplémentaire, au moins un organe (55) lié audit support (40), et au moins un actionneur (58) d'équilibrage, apte à amener ledit sous-ensemble mobile (3, 4, 8) dans une position d'équilibrage par rapport audit support (40), **caractérisée en ce que** ledit module d'équilibrage (51) est un module électro-mécanique, dans lequel ledit organe sollicité par ledit dispositif souple (22, 25, 53) est un écrou (55) d'un système (54) vis-écrou dont la vis (56), qui s'étend parallèlement à la direction dudit déplacement en translation, est entraînée en rotation par ledit actionneur d'équilibrage (58), et **en ce que** ledit dispositif souple (22, 25, 53) comprend deux ressorts (25) d'équilibrage qui s'étendent sensiblement parallèlement à la direction dudit déplacement en translation, et exercent des actions antagonistes sur ledit écrou (55).

2. Pince selon la revendication 1, **caractérisée en ce que** l'actionneur d'équilibrage (58) comprend un moteur électrique réversible (59).

3. Pince selon l'une des revendications 1 et 2, **caractérisée en ce que** ledit système d'équilibrage (52, 58) est également apte à bloquer ledit sous-ensemble mobile (3, 4, 8) dans une position par rapport audit support (40).

4. Pince selon la revendication 3, **caractérisée en ce que** ledit système d'équilibrage (52, 58) est également apte à amener ledit sous-ensemble mobile (3, 4, 8) dans une position de référence fixe, dite position détalonnée, par rapport audit support (40).

5. Pince selon l'une quelconque des revendication 1 à 4, **caractérisée en ce que** ledit module d'équilibrage (51) comprend au moins un détecteur de position, apte à détecter le déplacement dans ledit système d'équilibrage (52, 58) de la charge constituée par ledit sous-ensemble mobile (3, 4, 8) et des organes qui lui sont solidaires en déplacement par rapport audit support (40).

6. Pince selon la revendication 5, **caractérisée en ce qu'**un détecteur de position (62) est également apte à commander l'actionneur d'équilibrage (58) pour amener la charge dans sa position équilibrée.

7. Pince selon l'une des revendications 5 et 6, **caractérisée en ce que** ledit au moins un détecteur de position est un capteur (62) de position continu, comprenant au moins un élément (63) solidaire dudit support (40) et relié à un circuit électronique (60) de commande dudit actionneur d'équilibrage (58), et coopérant avec un second élément, solidaire dudit sous-ensemble mobile (3, 4, 8) dans ses déplacements.

8. Pince selon l'une quelconque des revendications 1 à 7, **caractérisée en ce que** ledit actionneur d'équilibrage (58) est apte à poursuivre l'entraînement dudit système vis-écrou (54) après mise en contact d'une butée d'arrêt (66) dudit système d'équilibrage avec une butée (67) de fin de course de détalonnage, jusqu'à la mise en contact de l'écrou (55) contre un élément rigide (68) interne audit système d'équilibrage.

9. Pince selon la revendication 8, **caractérisée en ce que** ledit élément rigide interne est une butée (68) d'arrêt de l'écrou (55) en translation sur la vis (56), et destinée à limiter la compression ainsi qu'éventuellement la traction d'au moins un ressort (25) d'équilibrage.

10. Pince selon la revendication 2, **caractérisée en ce que** ledit moteur (59) est commandé par un circuit électronique de commande agencé en carte (60) directement intégrée au moteur (59) ou audit système d'équilibrage (52, 58), et est éventuellement équipé d'un frein de sécurité (61), ainsi que d'un réducteur de sortie (61').

11. Pince selon l'une quelconque des revendications 1 à 10, **caractérisée en ce que** ledit dispositif permettant un déplacement suivant ledit degré de liberté supplémentaire est un dispositif (52) de guidage en translation, comportant au moins une colonne (23), parallèle à la direction de translation et solidaire en déplacement de l'un dudit sous-ensemble mobile (3, 4, 8) et dudit support (40), ladite au moins une colonne (23) étant montée axialement coulissante dans au moins un manchon (24) solidaire de l'autre dudit support (40) et dudit sous-ensemble mobile (3, 4, 8).

12. Pince selon la revendication 11, **caractérisée en ce que** ledit dispositif de guidage (52) est intégré audit système d'équilibrage (52, 58), et comprend deux colonnes (23) parallèles à ladite vis (56), de part et d'autre de cette dernière, et fixées dans ledit système d'équilibrage (52, 58), de sorte à coulisser chacune dans l'un de deux manchons (24) parallèles.

13. Pince selon l'une quelconque des revendications 1 à 12, **caractérisée en ce qu'**elle comprend de plus un actionneur (73) de détalonnage, qui est un actionneur auxiliaire linéaire, distinct dudit actionneur (58) d'équilibrage, et à direction d'action sensiblement parallèle à la vis (56) du système vis-écrou (54), et apte à solliciter ledit système d'équilibrage (52, 58) avec ledit sous-ensemble mobile (3, 4, 8) pour le déplacer jusqu'au contact d'une butée (66) d'arrêt dudit système (52, 58) contre une butée (67) de fin de course de détalonnage, et maintenir de façon rigide ledit sous-ensemble mobile (3, 4, 8) dans cette position.

14. Pince selon la revendication 13, **caractérisée en ce que** ledit actionneur (73) auxiliaire linéaire est un actionneur à simple effet avec rappel élastique, et de préférence fixé audit actionneur d'équilibrage (58).

15. Pince selon l'une quelconque des revendications 3 à 14 telle que rattachée à la revendication 2, **caractérisée en ce que** ledit moteur (59) comporte un limiteur de couple et/ou un capteur de position (70), qui, après détection de l'arrivée d'une butée (66) d'arrêt du système d'équilibrage (52, 58) en contact avec une butée (67) de fin de course de détalonnage, puis après détection de l'arrivée dudit écrou (55) en butée contre la butée (68) de limitation de la course de l'écrou, coupe l'alimentation électrique du moteur (59) et déclenche le serrage d'un frein (61) de sécurité, afin de bloquer le moteur (59) dans sa position.

16. Pince selon l'une quelconque des revendications 6 à 15 telle que rattachée aux revendications 2 et 5, **caractérisée en ce que** ledit au moins un détecteur de position comprend, d'une part, un capteur (70) de fin de course, intégré dans ou associé à une butée (67) de détalonnage et détectant la présence ou l'absence d'un contact mobile (71) intégré ou associé à une butée (66) d'arrêt dudit système d'équilibrage (52, 58), et, d'autre part, un autre capteur de position du type codeur (72), associé audit moteur (59) pour commander une rotation du moteur positionnant ladite butée d'arrêt (66) à une distance prédéterminée « d » de la position de détalonnage.

17. Pince selon la revendication 16, **caractérisée en ce qu'**elle comprend de plus des moyens de préhension (69), aptes à fixer ledit sous-ensemble mobile (3, 4, 8) et le système d'équilibrage (52, 58) en position de détalonnage, fixe par rapport audit support (40).

18. Pince selon la revendication 17, **caractérisée en ce que** lesdits moyens de préhension (69) sont agencés en moyens de fixation libérable combinés à ladite butée (67) de fin de course de détalonnage, pour fixer contre cette dernière ladite butée (66) d'arrêt dudit système d'équilibrage (52, 58), afin de maintenir le sous-ensemble mobile (3, 4, 8) en position de détalonnage.

19. Pince selon la revendication 18, **caractérisée en ce que** lesdits moyens de fixation libérable (69) sont réalisés sous la forme d'un électro-aimant, d'une ventouse pneumatique ou électromagnétique seuls ou associés à un système mécanique de préhension.

20. Pince selon l'une quelconque des revendications 1 à 12 et 15 à 19, **caractérisée en ce qu'**elle comprend de plus un actionneur de détalonnage constitué par ledit actionneur principal (4) du sous-ensemble mobile (3, 4, 8).

21. Pince selon la revendication 20, **caractérisée en ce qu'**une tige (7) dudit actionneur principal (4) présente un évidement longitudinal (76) délimité à une extrémité par une rampe (77) formant came pour une tête (78a) à une extrémité d'un pion (78) monté coulissant transversalement dans un alésage d'un corps (5) d'actionneur principal (4), et dont l'autre extrémité est agencée en embout en V (79) apte à s'engager transversalement dans un évidement en V (80) ménagé dans une face externe dudit système d'équilibrage (52, 58) monté mobile en translation par rapport à un support (72) du bras fixe (3) et de guidage du bras mobile (8), de sorte que la rentrée de la tige (7) de l'actionneur principal (4) dans le corps (5) de ce dernier entraîne un déplacement du pion (78) radialement vers l'extérieur du corps (5) d'actionneur et dans l'évidemment en V (80) dudit système d'équilibrage (52, 58) en provoquant, par coopération de l'embout en V (79) dudit pion et d'une rampe (85) de l'évidemment en V(80) dudit système, le déplacement en translation de ce dernier jusqu'à une position en butée en fin de course de détalonnage.

22. Pince selon l'une quelconque des revendications 1 à 21, **caractérisée en ce que** ledit module d'équilibrage (51) est déporté à l'extérieur de l'ensemble constitué par ledit sous-ensemble mobile (3, 4, 8) et ledit bâti (10).

23. Pince selon la revendication 22, **caractérisée en ce que** ledit module d'équilibrage (51) est monté en interface entre deux parties (38, 39) dudit support (40), dont une première partie (38) est solidaire dudit bâti (10) et/ou dudit sous-ensemble mobile (3, 4, 8), et la seconde partie (39) constitue le reste du support ou est solidaire du reste du support (40).

24. Pince selon la revendication 22, **caractérisée en ce que** ledit module d'équilibrage (51) est monté en interface entre ledit support (40) et ledit bâti (10) et/ou sous-ensemble mobile (3, 4, 8).

25. Pince selon la revendication 24, **caractérisée en ce que** ledit module d'équilibrage (51) se fixe sur un flanc du corps (5) de l'actionneur principal (4) et/ou dudit bâti (10) supportant ledit sous-ensemble mobile (3, 4, 8).

26. Pince selon l'une quelconque des revendications 1 à 25, **caractérisée en ce que** ledit module d'équilibrage (51) est mis en place sur une pince de type en C, à mouvement linéaire du bras mobile (8) par rapport au bras fixe (3), de sorte que les déplacements en translation autorisés par ledit module d'équilibrage (51) sont sensiblement parallèles aux déplacements du bras mobile (8), et donc sensiblement perpendiculaires au plan d'assemblage des tôles (1).

27. Pince selon l'une quelconque des revendications 1 à 25, **caractérisée en ce que** ledit module d'équilibrage (51) est mis en place sur une pince de type en X, à mouvement de rotation du bras mobile (8) par rapport au bras fixe (3), de sorte que les déplacements en translation autorisés par ledit module d'équilibrage (51) sont sensiblement perpendiculaires au plan d'assemblage des tôles (1), et donc sensiblement parallèles à la direction des deux extrémités (2, 9) de bras, bout à bout en position de fermeture de la pince.

28. Pince selon l'une quelconque des revendications 24 à 27, **caractérisée en ce que** ledit module d'équilibrage (51) est apte à se monter sur ledit bâti (10), dans l'une ou l'autre d'au moins deux positions autorisant des déplacements en translation sensiblement parallèle à respectivement l'une ou l'autre d'au moins deux directions inclinées entre elles, et de préférence sensiblement perpendiculaires entre elles, dans le plan d'une face de montage sur le bâti (10), selon que la pince est du type en C, ou en X, respectivement à déplacements en translation ou en rotation du bras mobile (8) par rapport au bras fixe (3).

29. Pince selon l'une quelconque des revendications 1 à 28, **caractérisée en ce qu'**elle est une pince à souder par résistance, et les extrémités respectivement des bras fixe (3) et mobile (8) sont des électrodes de soudage (2, 9), un transformateur de soudage étant, de préférence, intégré à l'ensemble du sous-ensemble mobile (3, 4, 8) et du bâti (10), et solidaire du bâti (10) et/ou du bras fixe (3).

## Patentansprüche

1. Blechgreifer, der dazu ausgelegt ist, in Kombination mit einem Manipulatorarm, einem so genannten Roboter, verwendet zu werden, umfassend:
- einen starren Rahmen (10), der verbindbar mit einem Träger (40), wie einem starren Standfuß oder dem Roboter, ist,
- einer beweglichen Untereinheit, die mit dem Rahmen (10) verbunden ist und umfasst:
- einen ersten Arm (3), der als fest bezeichnet wird,
- einen zweiten Arm (8), der als beweglich bezeichnet wird, und
- einen primären Aktuator (4), der dazu ausgelegt ist, den beweglichen Arm (8) relativ zu dem festen Arm (3) in einem ersten Freiheitsgrad durch Translation oder Rotation zu bewegen, sodass der Greifer geschlossen oder geöffnet wird, um respektive eine Blechverbindung (1) zwischen dem festen Arm (3) und dem beweglichen Arm (8) zu greifen oder die Blechverbindung (1) freizugeben, und
- ein Ausgleichsmodul (51), das einen weiteren Freiheitsgrad zwischen dem Träger (40) einerseits und einer die bewegliche Untereinheit (3, 4, 8) einschließenden Anordnung andererseits einführt, um die auf die Extremitäten (2, 9) jeweils des festen Arms (3) und des beweglichen Arms (8) in der Schließposition ausgeübten Belastungen auszugleichen, wobei das Ausgleichsmodul (51) umfasst:
- eine Vorrichtung (22, 23, 24), die eine translatorische Bewegung der beweglichen Untereinheit (3, 4, 8) bezüglich des Trägers (40) in dem weiteren Freiheitsgrad zulässt,
- ein Ausgleichssystem (52, 58), das eine flexible Vorrichtung (22, 25, 53) umfasst, die mit der beweglichen Untereinheit (3, 4, 8) verbunden ist und in dem weiteren Freiheitsgrad mindestens ein mit dem Träger (40) verbundenes Element (55) und mindestens einen Ausgleichsaktuator (58) vorspannt, und das dazu ausgelegt ist, die bewegliche Untereinheit (3, 4, 8) in eine Ausgleichsposition bezüglich des Trägers (40) zu bringen, **dadurch gekennzeichnet, dass** das Ausgleichsmodul (51) ein elektromechanisches Modul ist, in dem das durch die flexible Vorrichtung (22, 25, 53) vorgespannte Element eine Mutter (55) eines Schraube-Mutter-Systems (54) ist, dessen Schraube (56), die sich parallel zu der Richtung der translatorischen Bewegung erstreckt, durch den Ausgleichsaktuator (58) in Rotation versetzt wird, und dass die flexible Vorrichtung (22, 25, 53) zwei Ausgleichsfedern (25) umfasst, die sich im Wesentlichen parallel zu der Richtung der translatorischen Bewegung erstrecken und auf die Mutter (55) entgegengesetzte Wirkungen ausüben.

2. Greifer nach Anspruch 1, **dadurch gekennzeichnet, dass** der Ausgleichsaktuator (58) einen reversiblen Elektromotor (59) umfasst.

3. Greifer nach Anspruch 1 oder 2, **dadurch gekennzeichnet, dass** das Ausgleichssystem (52, 58) zugleich dazu ausgelegt ist, die bewegliche Untereinheit (3, 4, 8) in einer zu dem Träger (40) relativen Position zu blockieren.

4. Greifer nach Anspruch 3, **dadurch gekennzeichnet, dass** das Ausgleichssystem (52, 58) zugleich dazu ausgelegt ist, die bewegliche Untereinheit (3, 4, 8) in eine feste Bezugsposition bezüglich des Trägers (40) zu bringen, die als hintergriffene Position bezeichnet wird.

5. Greifer nach einem der Ansprüche 1 bis 4, **dadurch gekennzeichnet, dass** das Ausgleichsmodul (51) mindestens einen Positionsdetektor umfasst, der dazu ausgelegt ist, in dem Ausgleichssystem (52, 58) die Verschiebung der Belastung zu erfassen, die aufgebaut wird durch die bewegliche Untereinheit (3, 4, 8) und Elemente, die mit dieser bei der Bewegung bezüglich des Trägers (40) fest verbundenen sind.

6. Greifer nach Anspruch 5, **dadurch gekennzeichnet, dass** ein Positionsdetektor (62) zugleich dazu ausgelegt ist, den Ausgleichsaktuator (58) zu regeln, um die Belastung in eine ausgeglichene Position zu bringen.

7. Greifer nach Anspruch 5 oder 6, **dadurch gekennzeichnet, dass** der mindestens eine Positionsdetektor ein kontinuierlicher Positionssensor (62) ist, umfassend mindestens ein Element (63), das mit dem Träger (40) fest verbunden ist und das mit einer elektronischen Steuerschaltung (60) des Ausgleichsaktuators (58) verbunden ist, und mit einem zweiten Element kooperiert, das mit der beweglichen Untereinheit (3, 4, 8) bei deren Bewegungen fest verbunden ist.

8. Greifer nach einem der Ansprüche 1 bis 7, **dadurch gekennzeichnet, dass** der Ausgleichsaktuator (58) dazu ausgelegt ist, den Antrieb des Schraube-Mutter-Systems (54) nach der Kontaktherstellung eines Halteanschlags (66) des Ausgleichssystems mit einem Endanschlag (67) des Hintergreifens bis zur Kontaktherstellung der Mutter (55) mit einem starren Element (68) im Inneren des Ausgleichssystems fortzusetzen.

9. Greifer nach Anspruch 8, **dadurch gekennzeichnet, dass** das interne starre Element ein Halteanschlag (68) der Mutter (55) bei der Translation auf die Schraube (56) ist, der dazu bestimmt ist, die Kompression sowie gegebenenfalls die Traktion mindestens einer Ausgleichsfeder (25) zu begrenzen.

10. Greifer nach Anspruch 2, **dadurch gekennzeichnet, dass** der Motor (59) durch eine elektronische Steuerschaltung gesteuert wird, die auf einer direkt im Motor (59) oder in dem Ausgleichssystem (52, 58) integrierten Karte (60) angeordnet ist und die gegebenenfalls ausgestattet ist mit einer Sicherheitsbremse (61) sowie mit einem Ausgangsreduktionsmittel (61').

11. Greifer nach einem der Ansprüche 1 bis 10, **dadurch gekennzeichnet, dass** die Vorrichtung, die eine Bewegung in dem weiteren Freiheitsgrad zulässt, eine translatorische Führungsvorrichtung (52) ist, umfassend mindestens eine Säule (23), die parallel zu der Translationsrichtung ist und bei der Bewegung fest verbunden ist mit einem der beiden Elemente bewegliche Untereinheit (3, 4, 8) und Träger (40), wobei die mindestens eine Säule (23) axial verschiebbar in mindestens einer Manschette (24) montiert ist, die fest verbunden ist mit dem anderen der beiden Elemente Träger (40) und bewegliche Untereinheit (3, 4, 8).

12. Greifer nach Anspruch 11, **dadurch gekennzeichnet, dass** die Führungsvorrichtung (52) in dem Ausgleichssystem (52, 58) integriert ist und zwei Säulen (23) umfasst, die parallel zu der Schraube (56) verlaufen und beiderseits derselben angeordnet sind und die in dem Ausgleichssystem (52, 58) derart befestigt sind, dass jede in einer von zwei parallelen Manschetten (24) gleitet.

13. Greifer nach einem der Ansprüche 1 bis 12, **dadurch gekennzeichnet, dass** er ferner einen Aktuator (73) zum Hintergreifen umfasst, der ein von dem Ausgleichsaktuator (58) getrennter linearer Hilfsaktuator ist, dessen Wirkungsrichtung im Wesentlichen parallel zu der Schraube (56) des Schraube-Mutter-Systems (54) verläuft und der dazu ausgelegt ist, das Ausgleichssystem (52, 58) mit der beweglichen Untereinheit (3, 4, 8) vorzuspannen, um es bis zum Kontakt eines Halteanschlags (66) des Systems (52, 58) mit einem Endanschlag (67) des Hintergreifens zu bewegen und die bewegliche Untereinheit (3, 4, 8) an dieser Position starr zu halten.

14. Greifer nach Anspruch 13, **dadurch gekennzeichnet, dass** der lineare Hilfsaktuator (73) ein einfach wirkender Aktuator mit elastischer Rückholung ist und bevorzugt an dem Ausgleichsaktuator (58) befestigt wird.

15. Greifer nach einem der Ansprüche 3 bis 14, sofern abhängig von Anspruch 2, **dadurch gekennzeichnet, dass** der Motor (59) einen Drehmomentbegrenzer und/oder einen Positionssensor (70) umfasst, der, nach dem Erfassen des beginnenden Kontaktes eines Halteanschlags (66) des Ausgleichsystems (52, 58) mit einem Endanschlag (67) des Hintergreifens, sobald erfasst wurde, dass die Mutter (55) an den Anschlag (68) zur Begrenzung der Bewegungsstrecke der Mutter anschlägt, die Energieversorgung des Motors (59) unterbricht und das Festziehen einer Sicherheitsbremse (61) veranlasst, um den Motor (59) in seiner Position zu stoppen.

16. Greifer nach einem der Ansprüche 6 bis 15, sofern abhängig von den Ansprüchen 2 und 5, **dadurch gekennzeichnet, dass** der mindestens eine Positionsdetektor einerseits einen Endlagensensor (70) umfasst, der in einen Anschlag (67) des Hintergreifens integriert oder diesem zugeordnet ist und der die Anwesenheit oder Abwesenheit eines beweglichen Kontaktes (71) nachweist, der in einen Halteanschlag (66) des Ausgleichssystems (52, 58) integriert oder diesem zugeordnet ist, und andererseits einen weiteren Positionssensor vom Typ Kodierer (72) umfasst, der dem Motor (59) zugeordnet ist, um eine Drehung des Motors zu steuern, sodass der Halteanschlag (66) in einem vorbestimmten Abstand «d» von der hintergriffenen Position positioniert wird.

17. Greifer nach Anspruch 16, **dadurch gekennzeichnet, dass** er ferner Greifmittel (69) umfasst, die zum Fixieren der mobilen Untereinheit (3, 4, 8) und des Ausgleichssystems (52, 58) in der hintergriffenen Position ausgelegt sind, unbeweglich bezüglich des Trägers (40).

18. Greifer nach Anspruch 17, **dadurch gekennzeichnet, dass** die Greifmittel (69) als lösbare Befestigungsmittel in Kombination mit dem Endanschlag (67) des Hintergreifens angeordnet sind, um an diesem den Halteanschlag (66) des Ausgleichssystems (52, 58) zu befestigen, damit die bewegliche Untereinheit (3, 4, 8) in der hintergriffenen Position gehalten wird.

19. Greifer nach Anspruch 18, **dadurch gekennzeichnet, dass** die lösbaren Befestigungsmittel (69) einzeln oder in Kombination mit einem mechanischen Greifsystem als Elektromagnete eines pneumatischen oder elektromagnetischen Saugers ausgebildet sind.

20. Greifer nach einem der Ansprüche 1 bis 12 und 15 bis 19, **dadurch gekennzeichnet, dass** er ferner einen Aktuator zum Hintergreifen umfasst, bestehend aus dem primären Aktuator (4) der beweglichen Untereinheit (3, 4, 8).

21. Greifer nach Anspruch 20, **dadurch gekennzeichnet, dass** ein Stab (7) des primären Aktuators (4) eine Längsaussparung (76) aufweist, die an einem Ende durch eine Schräge (77) begrenzt ist, die eine Nocke für einen Kopf (78a) an einem Ende eines Zapfens (78) bildet, der seitlich verschiebbar in einer Bohrung eines Körpers (5) des primären Aktuators (4) gelagert ist und dessen anderes Ende als V-förmiges Endstück (79) ausgebildet ist, das dazu ausgelegt ist, quer in eine V-förmige Aussparung (80) einzugreifen, die in einer Außenfläche des Ausgleichssystems (52, 58) vorgesehen ist, und das translationsbeweglich bezüglich eines Trägers (72) des festen Arms (3) und der Führung des beweglichen Arms (8) befestigt ist, sodass der Einzug des Stabes (7) des primären Aktuators (4) in dessen Körper (5) eine Bewegung des Zapfens (78) radial zum Äußeren des Körpers (5) des Aktuators und in die V-förmige Aussparung (80) des Ausgleichssystems (52, 58) bewirkt, indem durch Kooperation des V-förmigen Endstücks (79) des Zapfens und einer Schräge (85) der V-förmigen Aussparung (80) des Systems eine translatorische Bewegung des letzteren bis zu einer Endposition am Ende der Strecke des Hintergreifens hervorgerufen wird.

22. Greifer nach einem der Ansprüche 1 à 21, **dadurch gekennzeichnet, dass** das Ausgleichsmodul (51) nach außerhalb der aus der beweglichen Untereinheit (3, 4, 8) und dem Rahmen (10) bestehenden Anordnung versetzt ist.

23. Greifer nach Anspruch 22, **dadurch gekennzeichnet, dass** das Ausgleichsmodul (51) an der Schnittstelle zwischen zwei Abschnitten (38, 39) des Trägers (40) angebracht ist, wobei der erste Abschnitt (38) mit dem Rahmen (10) und/oder der mobilen Untereinheit (3, 4, 8) fest verbunden ist, der zweite Abschnitt (39) den Rest des Trägers darstellt oder mit dem Rest des Trägers (40) fest verbunden ist.

24. Greifer nach Anspruch 22, **dadurch gekennzeichnet, dass** das Ausgleichsmodul (51) an der Schnittstelle zwischen dem Träger (40) und dem Rahmen (10) und/oder der beweglichen Untereinheit (3, 4, 8) angebracht ist.

25. Greifer nach Anspruch 24, **dadurch gekennzeichnet, dass** das Ausgleichsmodul (51) an einer Seitenwand des Körpers (5) des primären Aktuators (4) und/oder des Rahmens (10) befestigt ist und die bewegliche Untereinheit (3, 4, 8) trägt.

26. Greifer nach einem der Ansprüche 1 bis 25, **dadurch gekennzeichnet, dass** das Ausgleichsmodul (51) an einem Greifer vom Typ C angebracht ist, zur linearen Bewegung des beweglichen Arms (8) bezüglich des festen Arms (3), sodass die durch das Ausgleichsmodul (51) zugelassenen translatorischen Bewegungen im Wesentlichen parallel zu den Bewegungen des beweglichen Arms (8) und somit im Wesentlichen senkrecht zur Ebene der Blechverbindung (1) verlaufen.

27. Greifer nach einem der Ansprüche 1 bis 25, **dadurch gekennzeichnet, dass** das Ausgleichsmodul (51) an einem Greifer vom Typ X angebracht ist, zur Rotationsbewegung des beweglichen Arms (8) bezüglich des festen Arms (3), sodass die durch das Ausgleichsmodul (51) zugelassenen translatorischen Bewegungen im Wesentlichen senkrecht zur Ebene der Blechverbindung (1) und somit im Wesentlichen parallel zu der Richtung der beiden Extremitäten (2, 9) des Arms verlaufen, Ende an Ende in Schließposition des Greifers.

28. Greifer nach einem der Ansprüche 24 bis 27, **dadurch gekennzeichnet, dass** das Ausgleichsmodul (51) dazu ausgelegt ist, auf dem Rahmen (10) befestigt zu werden, in der einen oder anderen von mindestens zwei Positionen, die translatorische Bewegungen zulassen, die im Wesentlichen parallel zu der einen oder anderen von mindestens zwei zueinander schräg stehenden Richtungen verlaufen, bevorzugt senkrecht zueinander, in der Ebene einer Montagefläche auf dem Rahmen (10), je nachdem, ob der Greifer vom Typ C oder X ist, entsprechend für translatorische oder rotatorische Bewegungen des beweglichen Arms (8) bezüglich des festen Arms (3) ausgelegt ist.

29. Greifer nach einem der Ansprüche 1 bis 28, **dadurch gekennzeichnet, dass** es sich um eine Widerstandsschweißzange handelt, und die jeweiligen Extremitäten des festen Arms (3) und des beweglichen Arms (8) Schweißelektroden (2, 9) darstellen, wobei ein Schweißtransformator bevorzugt in der Anordnung aus der beweglichen Untereinheit (3, 4, 8) und dem Rahmen (10) integriert ist und fest mit dem Rahmen (10) und/oder dem festen Arm (3) verbunden ist.

## Claims

1. A clamp for gripping sheet metal and being able to be used in association with a manipulating arm, called a robot, and including:
- a rigid frame (10) capable to be connected to a support (40), such as a rigid foot or said robot,
- a mobile subassembly, connected to said frame (10), and comprising:
- a first so-called stationary arm (3),
- a second so-called mobile arm (8), and
- a main actuator (4) capable of moving the mobile arm (8) relative to the stationary arm (3) according to a first degree of freedom, in translation or rotation, so as to close or open the clamp in order, respectively, to grip a sheet metal assembly (1) between the stationary (3) and mobile (8) arms or to release the sheet metal assembly (1), and
- a balancing module (51), introducing an additional degree of freedom between said support (40), on the one hand, and, on the other hand, an assembly integrating said mobile subassembly (3, 4, 8), so as to balance the forces exerted on the ends (2, 9) respectively of the stationary (3) and mobile (8) arms in a closed position, said balancing module (51) comprising:
- a device (22, 23, 24) enabling a movement according to said additional degree of freedom, in translation of said mobile subassembly (3, 4, 8) with respect to the support (40),
- a balancing system (52, 58) including a flexible device (22, 25, 53) connected to said mobile subassembly (3, 4, 8) and urging, according to said additional degree of freedom, at least one member (55) connected to said support (40), and at least one balancing actuator (58), capable of bringing said mobile subassembly (3, 4, 8) into a balancing position with respect to said support (40),
**characterized in that** said balancing module (51) is an electromechanical module, in which said member urged by said flexible device (22, 25, 53) is a nut (55) of a screw-nut system (54) of which the screw (56), which extends parallel to the direction of said translation movement, is driven in rotation by said balancing actuator (58), and **in that** said flexible device (22, 25, 53) includes two balancing springs (25) that extend substantially parallel to the direction of said translation movement, and exert opposing actions on said nut (55).

2. The clamp according to claim 1, **characterized in that** the balancing actuator (58) includes a reversible electric motor.

3. The clamp according to anyone of claims 1 and 2, **characterized in that** the balancing system (52, 58) is also capable of locking said mobile subassembly (3, 4, 8) in a position with respect to said support (40).

4. The clamp according to claim 3, **characterized in that** said balancing system (52, 58) is also capable of bringing said mobile subassembly (3, 4, 8) into a stationary reference position, called the relief position, with respect to said support (40).

5. The clamp according to anyone of claims 1-4, **characterized in that** said balancing module (51) includes at least one position detector, capable of detecting the movement in said balancing system (52, 58) of the load formed by said mobile subassembly (3, 4, 8) and members that are secured thereto in movement with respect to said support (40).

6. The clamp according to claim 5, **characterized in that** a position detector (62) is also capable of controlling the balancing actuator (58) in order to bring the load into its balanced position.

7. The clamp according to anyone of claims 5 and 6 **characterized in that** said at least one position detector is a continuous position sensor (62), including at least one element (63) secured to said support (40) and connected to an electronic control circuit (60) of said balancing actuator (58), and cooperating with a second element, secured to said mobile subassembly (3, 4, 8) in its movements.

8. Clamp according to anyone of claims 1-7, **characterized in that** said balancing actuator (58) is capable of continuing the driving of said screw-nut system (54) after bringing a stop (66) of said balancing system into contact with a relief end-of-stroke stop (67), until the nut (55) is brought into contact with a rigid element (68) inside said balancing system.

9. The clamp according to claim 8, **characterized in that** said rigid internal element is a stop (68) of the nut (55) in translation on the screw (56), and is intended to limit the compression as well as optionally the pulling force of at least one balancing spring (25).

10. The clamp according to claim 2, **characterized in that** said motor (59) is controlled by an electronic control circuit arranged in a board (60) directly integrated in the motor (59) or said balancing module (52, 58) and is optionally equipped with a safety brake (6), as well as an output reducer (61').

11. The clamp according to anyone of claims 1-10, **characterized in that** said device enabling a movement according to said additional degree of freedom is a translation guide device (52), comprising at least one column (23), parallel to the translation direction and secured in movement to one of said mobile subassembly (3, 4, 8) and said support (40), said at least one column (23) being mounted so as to slide axially into at least one sleeve (24) secured to the other of said support (40) and said mobile subassembly (3, 4, 8).

12. The clamp according to claim 11, **characterized in that** said guide device (52) is integrated in said balancing system (52, 58), and includes two columns (23) parallel to said screw (56), on each side of the latter, and attached in said balancing system (52, 58), so as to slide each into one of two parallel sleeves (24).

13. The clamp according to anyone of claims 1-12, **characterized in that** it further includes a relief actuator (73), which is an auxiliary linear actuator, distinct from said balancing actuator (58), and with a direction of action substantially parallel to said screw (56) of the screw-nut system (54), and capable of urging said balancing system (52, 58) with said mobile subassembly (3, 4, 8) in order to move said balancing system until a stop (66) of said system (52, 58) comes into contact with a relief end-of-stroke stop (67), and rigidly hold said mobile subassembly (3, 4, 8) in this position.

14. The clamp according to claim 13, **characterized in that** said auxiliary linear actuator (73) is a single-effect actuator with resilient return, and is preferably attached to said balancing actuator (58).

15. The clamp according to anyone of claims 3-14 when depending on claim 2, **characterized in that** said motor (59) comprises a torque limiter and/or a position sensor (70) that, after detecting that a stop (66) of said balancing system (52, 58) has come into contact with a relief end-of-stroke stop (67), then after detecting that said nut (55) is abutting said stop (68) limiting the stroke of said nut, cuts the electrical supply to the motor (59) and activates the application of a safety brake (61), so as to lock the motor (59) in its position.

16. The clamp according to anyone of claims 6-15 when depending on claims 2 and 5, **characterized in that** said at least one position detector includes, on the one hand, an end-of-stroke sensor (70), integrated in or associated with a relief stop (67) and detecting the presence or absence of a mobile contact (71) integrated in or associated with a stop (66) of said balancing system (52, 58), and, on the other hand, another position sensor of the coder type (72), associated with said motor (59) in order to control a rotation of said motor positioning said stop (66) at a predetermined distance "d" from the relief position.

17. The clamp according to claim 16, **characterized in that** it further includes gripping means (69), capable of attaching said mobile subassembly (3, 4, 8) and said balancing system (52, 58) in the relief position, stationary with respect to said support (40).

18. The clamp according to claim 17, **characterized in that** said gripping means (69) are arranged as releasable attachment means combined with said relief end-of-stroke stop (67), in order to attach against the latter said stop (66) of said balancing system (52, 58), so as to maintain said mobile subassembly (3, 4, 8) in the relief position.

19. The clamp according to claim 18, **characterized in that** said releasable attachment means (69) are produced in the form of one of an electromagnet and a pneumatic or electromagnetic suction member alone or combined with a mechanical gripping system.

20. The clamp according to anyone of claims 1-12 and 15-19, **characterized in that** it further includes a relief actuator formed by said main actuator (4) of said mobile subassembly (3, 4, 8).

21. The clamp according to claim 20, **characterized in that** a rod (7) of said main actuator (4) has a longitudinal recess (76) delimited at one end by a ramp (77) forming a cam for a head (78a) at one end of a pin (78) mounted so as to slide transversely into a bore of a body (5) of the main actuator (4), and of which the other end is arranged as a V-shaped end piece (79) capable of being transversally engaged in a V-shaped recess (80) provided in an external face of said balancing system (52, 58) mounted so as to be capable of moving in translation with respect to a support (72) of said stationary arm (3) and for guiding the mobile arm (8), so that the retraction of the rod (7) of the main actuator (4) into the body (5) of this latter causes a radial movement of said pin (78) toward an outside of said actuator body (5) and into the V-shaped recess (80) of said balancing system (52, 58), causing, by cooperation of the V-shaped end piece (79) of said pin and a ramp (85) of the V-shaped recess (80) of said system, a translation movement of said balancing module until a relief end-of-stroke stop position is reached.

22. The clamp according to anyone of claims 1-21, **characterized in that** said balancing module (51) is offset outside the assembly formed by said mobile subassembly (3, 4, 8) and said frame (10).

23. The clamp according to claim 22, **characterized in that** said balancing module (51) is mounted as an interface between two parts (38, 39) of said support (40), of which a first part (38) is secured to said frame (10) and/or said mobile subassembly (3, 4, 8), and the second part (39) forms a remainder of said support or is secured to said remainder of said support (40).

24. The clamp according to claim 22, **characterized in that** said balancing module (51) is mounted as an interface between said support (40) and said frame (10) and/or said mobile subassembly (3, 4, 8).

25. The clamp according to claim 24, **characterized in that** said balancing module (51) is attached on a side of the body (5) of the main actuator (4) and/or said frame (10) supporting said mobile subassembly (3, 4, 8).

26. The clamp according to anyone of claims 1-25, **characterized in that** said balancing module (51) is placed on a C-type clamp, with linear movement of the mobile arm (8) with respect to the stationary arm (3), so that the translation movements allowed by said balancing module (51) are substantially parallel to the movements of said mobile arm (8), and are therefore substantially perpendicular to a plane of said sheet metal assembly.

27. The clamp according to anyone of claims 1-25, **characterized in that** said balancing module (51) is placed on an X-type clamp, with a rotation movement of the mobile arm (8) with respect to the stationary arm (3), so that translation movements allowed by said balancing module (51) are substantially perpendicular to a plane of said sheet metal (1) assembly, and are therefore substantially parallel to the direction of the two arm ends (2, 9), end-to-end when the clamp is in said closed position.

28. The clamp according to anyone of claims 24-27, **characterized in that** said balancing module (51) is capable of being mounted on said frame (10), in one or the other of at least two positions allowing translation movements substantially parallel to one or the other, respectively, of at least two directions inclined with respect to one another, and preferably substantially perpendicular to one another, in the plane of an assembly face on said frame (10), depending on whether the clamp is of the C type or of the X type, respectively with translation or rotation movements of the mobile arm (8) with respect to the stationary arm (3).

29. The clamp according to anyone of claims 1-28, **characterized in that** the clamp is a clamp for resistance welding, and the ends, respectively, of the stationary (3) and mobile (8) arms are welding electrodes (2, 9), a welding transformer being, preferably, integrated in the assembly of the mobile subassembly (3, 4, 8) and the frame (10), and secured to the frame (10) and/or the stationary arm (3).
